# EUROPEAN PATENT APPLICATION

(11) **EP 2 357 771 A1**
(43) Date of publication of application: **17.08.2011**
(21) Application number: 09831464.4
(22) Date of filing: 08.12.2009
(51) Int. Cl.: H04L 29/06

(54) **TRUSTED NETWORK CONNECT HANDSHAKE METHOD BASED ON TRI-ELEMENT PEER AUTHENTICATION**

(30) Priority: 08.12.2008 CN 200810184130
(71) Applicant: China Iwncomm Co., Ltd, Shaanxi 710075 (CN)
(72) Inventor: XIAO, Yuelei, Shaanxi 710075 (CN); CAO, Jun, Shaanxi 710075 (CN); GE, Li, Shaanxi 710075 (CN); HUANG, Zhenhai, Shaanxi 710075 (CN)
(74) Representative: Epping - Hermann - Fischer
(86) International application number: PCT/CN2009/075388
(87) International publication number: WO 2010/066187

(57) **Abstract**

A trusted network connect handshake method based on tri-element peer authentication is provided, which comprises the following steps. An access controller (AC) sends message 1 for handshake activation to an Access Requestor (AR). The AR sends message 2 for access handshake request to the AC after receiving message 1. The AC sends message 3 for certificate authentication and integrity evaluation request to a Policy Manager (PM) after receiving message 2. The PM sends message 4 for certificate authentication and integrity evaluation response to the AC after receiving message 3. The AC sends message 5 for access handshake response to the AR after receiving message 4. The trusted network connect handshake is completed after the AR receives message 5.

## Description

This application claims priority to Chinese Patent Application no. 200810184130.X, filed with the Chinese Patent Office on December 8, 2008 and entitled "Trusted network connect handshake method based on tri-element peer authentication", which is hereby incorporated by reference in its entirety.

### Field of the Invention

The present invention relates to a trusted network connect handshake method based on Tri-element peer authentication.

### Background of the Invention

The issue of malicious software, e.g., viruses, worms, etc., has become extremely prominent along with the informationized development. There have arose more than thirty-five thousand kinds of malicious software at present, and more than forty million computers have been infected annually. It is required for inhibition of such attacks to not only address secured transmission and a check for data input but also prevent against them from an origin, that is, each of terminals connected to a network. Unfortunately, traditional security preventions fail to prevent against a variety of malicious attacks.

The international Trusted Computing Group (TCG) has established specifically for this issue a network connection specification based on trusted computing technology - Trusted Network Connect (TNC), referred as TCG-TNC, which includes an open terminal integrity framework and a set of standards for guaranteeing secure interoperations. This set of standards can protect a network as demanded for a user to a user-customized protection extent. The TCG-TNC is essentially intended to establish a connection for the integrity of a terminal. It is initially required to create a set of strategies for the operation condition of a trusted network internal system. Only a terminal complying with a strategy which is set for the network can access the network, and the network will isolate and locate those devices that do not comply with the strategy. An attack of root kits can also be blocked due to the use of a trusted platform module. The root kits is a kind of attack script, modified system program or set of attack scripts and kits, which is intended in a target system to acquire illegally a top control authority of the system.

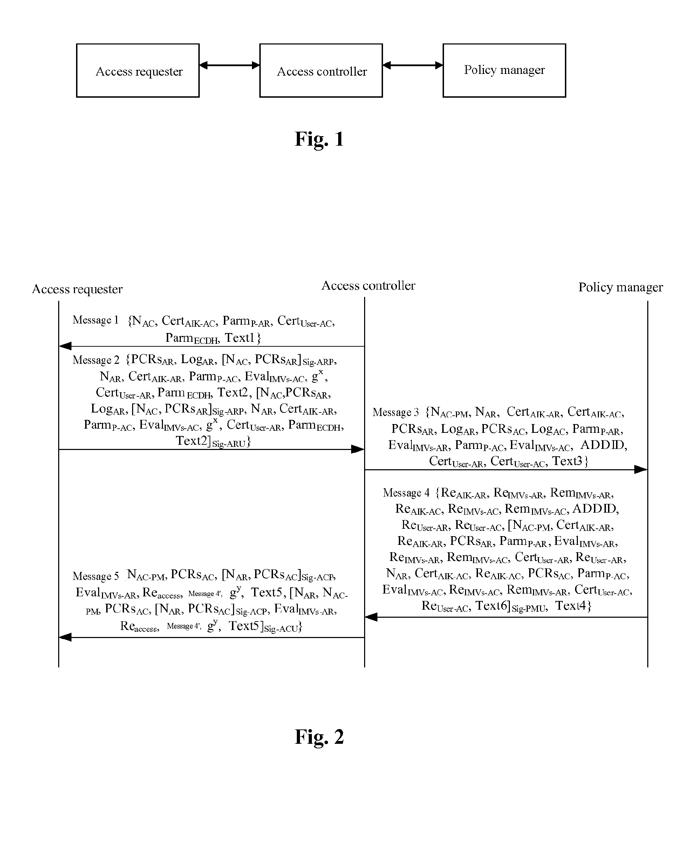

Since an access requester can not evaluate integrity of a policy enforcement point in the TCG-TNC framework, there is the issue of the policy enforcement point being not trusted in the TCG-TNC framework, so that researchers have proposed a trusted network connection framework based upon Tri-element Peer Authentication (TePA) as illustrated in Fig.1 to address the issue. In the trusted network connection framework based upon Tri-element Peer Authentication illustrated in Fig.1, an access requester, an access controller and a policy manager perform firstly a user identity authentication process based upon Tri-element Peer Authentication and then a platform authentication process upon Tri-element Peer Authentication to set up a trusted network connection of the access requester and the access controller.

Since the platform authentication process is closely associated with the user identity authentication process are and some data used in the platform authentication process is user-based, the user identity authentication process and the platform authentication process can be bound into a trusted network connect handshake method to thereby simply the trusted network connection process illustrated in Fig.1.

### Summary of the Invention

The invention provides a trusted network connect handshake method based on Tri-element Peer Authentication to address the foregoing technical problem present in the prior art.

In a technical solution of the invention, the invention is a trusted network connect handshake method based on Tri-element Peer Authentication, which includes the following steps of:
1) transmitting by an access controller to an access requester a message 1 including an authentication identifier N_{AC} of the access controller, a platform identity certificate Cert_{AIK-AC} of the access controller, platform integrity measurement information Parm_{P-AR} requested by the access controller from the access requester, a user identity certificate Cert_{User-AC} of the access controller, an ECDH parameter Parm_{ECDH} for key negotiation, and another parameter Text1;
2) transmitting by the access requester a message 2 to the access controller upon reception of the message 1;
3) transmitting by the access controller a message 3 to a policy manager upon reception of the message 2;
4) transmitting by the policy manager a message 4 to the access controller upon reception of the message 3;
5) transmitting by the access controller a message 5 to the access requester upon reception of the message 4; and
6) performing a trusted network connect handshake by the access requester upon reception of the message 5.

The step 2) includes: upon reception of the message 1, firstly extracting by the access requester a corresponding platform configuration register value PCRs_{AR} of the access requester, a platform integrity measurement log Log_{AR} of the access requester, and a signature [N_{AC}, PCRs_{AR}]_{Sig-ARP} performed with a private key corresponding to a platform identity certificate of the access requester on the authentication identifier N_{AC} of the access controller and the platform configuration register value PCRs_{AR} of the access requester according to the platform integrity measurement information Parm_{P-AR} requested by the access controller from the access requester, and then transmitting to the access controller a message 2 including the platform configuration register value PCR_{SAR} of the access requester, the platform integrity measurement log Log_{AR} of the access requester, the signature [N_{AC}, PCRs_{AR}]_{Sig-ARP} performed with the private key corresponding to the platform identity certificate Cert_{AIK-AR} of the access requester on the authentication identifier N_{AC} of the access controller and the platform configuration register value PCRs_{AR} of the access requester, a challenge N_{AR} of the access requester, the platform identity certificate Cert_{AIK}-_{AR} of the access requester, platform integrity measurement information Parm_{P-AC} requested by the access requester from the access controller, an integrity verifier level evaluation policy Eval_{IMVs-AC} of platform integrity of the access requester for the access controller, key data g^{x} of the access requester, a user identity certificate Cert_{User-AR} of the access requester, the ECDH parameter Parm_{ECDH} for key negotiation, another parameter Text2, and a signature [N_{AC}, PCRs_{AR}, Log_{AR}, [N_{AC}, PCRS_{AR}]_{Sig-ARP}, N_{AR}, Cert_{AIK-AR}, Parm_{P-AC}, EVal_{IMVs-AC}, g^{x}, Cert_{User-AR,} Parm_{ECDH}, another parameter Text2]_{Sig-ARU} performed with a private key corresponding to the user identity certificate Cert_{User-AR} of the access requester on the other fields except for the present field in the message 2.

The step 3) includes: upon reception of the message 2, firstly verifying by the access controller validity of the signature [N_{AC}, PCRs_{AR}, Log_{AR}, [N_{AC}, PCRs_{AR}]sig-_{ARP}, N_{AR}, Cert_{AIK-AR}, Parm_{P-AC}, Eval_{IMVs-AC}, g^{x}, Cert_{User-AR}, Parm_{ECDH}, another parameter Text2]_{Sig-ARU} performed with the private key corresponding to the user identity certificate Cert_{User-AR} of the access requester on the other fields except for the present field in the message 2, and if verification fails, then discarding the message; otherwise, verifying validity of the signature [N_{AC}, PCRs_{AR}]_{sig-ARP} performed with the private key corresponding to the platform identity certificate Cert_{AIK-AR} of the access requester on the authentication identifier N_{AC} of the access controller and the platform configuration register value PCRs_{AR} of the access requester, and if verification fails, then discarding the message; otherwise, extracting a corresponding platform configuration register value PCRs_{AC} of the access controller, a platform integrity measurement log Log_{AC} of the access controller, and a signature [N_{AR}, PCRs_{AC}]_{Sig-ACP} performed with a private key corresponding to the platform identity certificate Cert_{AIK-AC} of the access controller on the challenger N_{AR} of the access requester and the platform configuration register value PCRs_{AC} of the access controller according to the platform integrity measurement information Parm_{P-AC} requested by the access requester from the access controller, and then transmitting to the policy manager a message 3 including a challenger N_{AC-PM} of the access controller, the challenger N_{AR} of the access requester, the platform identity certificate Cert_{AIK-AR} of the access requester, the platform identity certificate Cert_{AIK-AC} of the access controller, the platform configuration register value PCRs_{AR} of the access requester, the platform integrity measurement log Log_{AR} of the access requester, the platform configuration register value PCRs_{AC} of the access controller, the platform integrity measurement log Log_{AC} of the access controller, the platform integrity measurement information Parm_{P-AR} requested by the access controller from the access requester, an integrity verifier level evaluation policy Eval_{IMVs-AR} of platform integrity of the access controller for the access requester, the platform integrity measurement information Parm_{P-AC} requested by the access requester from the access controller, the integrity verifier level evaluation policy Eval_{IMVs-AC} of platform integrity of the access requester for the access controller, a concatenation value ADDID of MAC addresses of the access requester and the access controller, the user identity certificate Cert_{User-AR} of the access requester, the user identity certificate Cert_{User-AC} of the access controller, and another parameter Text3.

The step 4 includes: firstly generating a verification result Re_{User-AR} of the user identity certificate of the access requester and a verification result Re_{User-AC} of the user identity certificate of the access controller; and then generating a verification result Re_{AIK-AR} of the platform identity certificate of the access requester and a verification result Re_{AIK-AC} of the platform identity certificate of the access controller; and if the platform identity certificate of the access requester is valid, then generating an integrity verifier level evaluation result Re_{IMVs}-_{AR} of platform integrity of the access requester and integrity verifier level remediation information Rem_{IMVs}-_{AR} of platform integrity of the access requester, and if the platform identity certificate of the access controller is valid, then generating an integrity verifier level evaluation result Re_{IMVs-AC} of platform integrity of the access controller and integrity verifier level remediation information Rem_{IMVs-AC} of platform integrity of the access controller, and finally transmitting a message 4 to the access controller, wherein the message 4 is constituted in two forms: in a first form, the message 4 includes the verification result Re_{AIK-AR} of the platform identity certificate of the access requester, the integrity verifier level evaluation result Re_{IMVs-AR} of platform integrity of the access requester, the integrity verifier level remediation information Rem_{IMVs-AR} of platform integrity of the access requester, the verification result Re_{AIK-AC} of the platform identity certificate of the access controller, the integrity verifier level evaluation result Re_{IMVs-AC} of platform integrity of the access controller, the integrity verifier level remediation information Rem_{IMVs-AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR}, EVal_{IMVs-AR}, Re_{IMVs-AR5} Rem_{IMVs-AC}, Cert_{User-AR}, Re_{User-AR}, N_{AR}, Cert_{AIK-AC}, Re_{AIK-AC}, PCRs_{AC}, Parm_{P-AC}, Eval_{IMVs-AC}, Re_{IMVs-AC}, Rem_{IMVs-AR}, Cert_{User-AC}, Re_{User-Ac}, another parameter Text6]_{Sig-PMU} performed with a private key corresponding to a user identity certificate Cert_{User-PM} of the policy manager on the challenger N_{AC}-_{PM} of the access controller, the platform identity certificate Cert_{AIK}-_{AR} of the access requester, the verification result Re_{AIK-AR} of the platform identity certificate of the access requester, the platform configuration register value PCR_{SAR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text6, and another parameter Text4; and in the second form, the message 4 includes the verification result Re_{AIK}-_{AR} of the platform identity certificate of the access requester, the integrity verifier level evaluation result Re_{IMVs-AR} of platform integrity of the access requester, the integrity verifier level remediation information Rem_{IMVs-AR} of platform integrity of the access requester, the verification result Re_{AIK-AC} of the platform identity certificate of the access controller, the integrity verifier level evaluation result Re_{IMVs-AC} of platform integrity of the access controller, the integrity verifier level remediation information Rem_{IMVs-AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR}, Eval_{IMVs-AR}, Re_{IMVs-AR}, Rem_{IMVs-AC}, Cert_{User-AR}, Re_{User-AR}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester and another parameter Text6, a signature [N_{AR}, Cert_{AIK-AC}, Re_{AIK-AC}, PCRs_{AC}, Parm_{P-AC}, EVal_{IMVs-AC}, Re_{IMVs-AC}, Rem_{IMVs-AR}, Cert_{User-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text7, and another parameter Text4.

The step 5) includes: upon reception of the message 4, if the message 4 is constituted in the first form, firstly verifying by the access controller validity of the signature [N_{AC-PM}, Cert_{AIK-AR}, Re_{AIK-AR}, PCRs_{AR}, Parm_{P-AR}, Eval_{IMVs-AR}, Re_{IMVs-AR,} Rem_{IMVs-AC}, Cert_{User-AR}, Re_{User-AR}, N_{AR}, Cert_{AIK-AC}, Re_{AIK-AC}, PCRs_{AC}, Parm_{P-AC}, Eval_{IMVs-AC}, Re_{IMVs-AC}, Rem_{IMVs-AR}, Cert_{User-AC}, Re_{User-AC,} another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text6, then generating a platform level evaluation result Re_{P-AR} of platform integrity of the access requester from the integrity verifier level evaluation result Re_{IMVs-AR} of platform integrity of the access requester, generating a platform authentication result of the access requester from the verification result Re_{AIK-AR} of the platform identity certificate of the access requester and the platform level evaluation result Re_{P-AR} of platform integrity of the access requester, next generating an access result Re_{access} of the access controller for the access requester from the platform authentication result of the access requester and the verification result Re_{User-AR} of the user identity certificate of the access requester, next generating key data g^{y} of the access controller and generating a session key between the access requester and the access controller from the key data g^{x} of the access requester, the key data g^{y} of the access controller and the ECDH parameter Parm_{ECDH} for key negotiation, and finally transmitting to the access requester a message 5 (constituted in a first form) including the challenger N_{AC-PM} of the access controller, the platform configuration register value PCRs_{AC} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, the integrity verifier level evaluation policy Eval_{IMVs-AR} of platform integrity of the access controller for the access requester, the access result Re_{access} of the access controller for the access requester, a message 4', the key data g^{y} of the access controller, another parameter Text5, and a signature [N_{AR}, N_{AC-PM}, PCRs_{AC}, [N_{AR}, PCRs_{AC}]_{Sig-ACP}, Eval_{IMVs-AR}, Re_{access}, the message 4', g^{y}, another parameter Text5]_{Sig-ACU} performed with the private key corresponding to the user identity certificate of the access controller on the other fields except for the present field in the message 5, where the message 4' refers to the other fields except for the concatenation value ADDID of the MAC addresses of the access requester and the access controller in the message 4; or if the message 4 is constituted in the second form, then firstly verifying validity of the signature [N_{AC-PM}, Cert_{AIK-AR}, Re_{AIK-AR}, PCRS_{AR}, Parm_{P-AR}, Eval_{IMVs-AR}, Re_{IMVs-AR}, Rem_{IMVs-AC}, Cert_{User-AR}, Re_{User-AR,} another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCR_{SAR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester and another parameter Text6, and then generating a platform level evaluation result Re_{P-AR} of platform integrity of the access requester from the integrity verifier level evaluation result Re_{IMVs-AR} of platform integrity of the access requester, generating a platform authentication result of the access requester from the verification result Re_{AIK-AR} of the platform identity certificate of the access requester and the platform level evaluation result Re_{P-AR} of platform integrity of the access requester, next generating an access result Re_{access} of the access controller for the access requester from the platform authentication result of the access requester and the verification result Re_{User-AR} of the user identity certificate of the access requester, next generating key data g^{y} of the access controller and generating a session key between the access requester and the access controller from the key data g^{x} of the access requester, the key data g^{y} of the access controller and the ECDH parameter Parm_{ECDH} for key negotiation, and finally transmitting to the access requester a message 5 (constituted in a second form) including the challenger N_{AC-PM} of the access controller, the platform configuration register value PCRs_{AC} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, Re_{access}, the verification result Re_{AIK-AC} of the platform identity certificate of the access controller, the integrity verifier level evaluation result Re_{IMVs-AC} of platform integrity of the access controller, the verification result Re_{User-AC} of the user identity certificate of the access controller, the integrity verifier level remediation information Rem_{IMVs}-_{AR} of platform integrity of the access requester, the key data g^{y} of the access controller, the signature [N_{AR}, Cert_{AIK-AC}, Re_{AIK-AC}, PCRs_{AC}, Parm_{P-AC}, EVal_{IMVs-AC}, Re_{IMVs-AC}, Rem_{IMVs-AR}, Cert_{User-AC}, Re_{User-AC}, another parameter Text7]_{Sig-PMU} performed with the private key corresponding to the user identity certificate Cert_{User}-_{PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text7, another parameter Text5, and a signature [N_{AR}, N_{AC-PM}, PCRs_{AC}, [N_{AR}, PCRS_{AC}]_{Sig-ACP}, Re_{access}, Re_{AIK}-_{AC}, Re_{IMVs-AC}, Re_{User-AC}, Rem_{IMVs-AR}, g^{y}, [N_{AR}, Cert_{AIK-AC}, Re_{AIK-AC}, PCRs_{AC}, Parm_{P-AC}, EVal_{IMVs-AC}, Re_{IMVs-AC,} Rem_{IMVs-AR}, Cert_{User-AC}, Re_{User-AC}, another parameter Text7]_{Sig-PMU}, another parameter Text5]_{Sig-ACU} performed with a private key corresponding to the user identity certificate Cert_{User-AC} of the access controller on the other fields except for the present field in the message 5.

The step 6) includes: upon reception of the message 5, if the message 5 is constituted in the first form, then firstly verifying by the access requester validity of the signature [N_{AR}, N_{AC-PM}, PCR_{SAC}, [N_{AR}, PCRs_{AC}]_{Sig-ACP}, EVal_{IMVs-AR}, Re_{access}, the message 4', g^{y}, another parameter Text5]_{Sig-ACU} performed with the private key corresponding to the user identity certificate Cert_{User-AC} of the access controller on the other fields except for the present field in the message 5, and if verification fails, then discarding the message; otherwise, verifying validity of the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, and if verification fails, then discarding the message; otherwise, verifying validity of the signature [N_{AC-PM}, Cert_{AIK-AR}, Re_{AIK-AR}, PCRs_{AR}, Parm_{P-AR}, Eval_{IMVs-AR}, Re_{IMVs-AR}, Rem_{IMVs-AC}, Cert_{User-AR}, Re_{User-AR,} N_{AR}, Cert_{AIK-AC}, Re_{AIK-AC}, PCRs_{AC}, Parm_{P-AC}, Eval_{IMVs-AC}, Re_{IMVs-AC}, Rem_{IMVs-AR}, Cert_{User-AC,} Re_{User-AC,} another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs}-_{AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text6 in the message 4', and if verification fails, then discarding the message; otherwise, generating a platform level evaluation result Re_{P-AC} of platform integrity of the access controller from the integrity verifier level evaluation result Re_{IMVs-AC} of platform integrity of the access controller, generating a platform authentication result of the access controller from the verification result Re_{AIK-AC} of the platform identity certificate of the access controller and the platform level evaluation result Re_{P-AC} of platform integrity of the access controller, and next generating an access decision of the access requester for the access controller from the platform authentication result of the access controller and the verification result Re_{User-AR} of the user identity certificate of the access controller, and finally generating a session key between the access requester and the access controller by the access controller from the key data g^{x} of the access requester, the key data g^{y} of the access controller and the ECDH parameter Parm_{ECDH} for key negotiation,; or if the message 5 is constituted in the second form, then firstly verifying validity of the signature [N_{AR}, N_{AC-PM}, PCRs_{AC}, [N_{AR}, PCRs_{AC}]_{Sig-ACP}, Re_{access}, Re_{AIK-AC}, Re_{IMVs-AC}, Re_{User-AC}, Rem_{IMVs-AR}, g^{y}, [N_{AR}, Cert_{AIK}-_{AC}, Re_{AIK}-_{AC}, PCRs_{AC}, Parm_{P-AC}, EVal_{IMVs-AC}, Re_{IMVs-AC}, Rem_{IMVs-AR}, Cert_{User-AC}, Re_{User-AC}, another parameter Text7]_{Sig-PMU}, another parameter Text5]_{Sig-ACU} performed with the private key to the user identity certificate Cert_{User-AC} of the access controller on the other fields except for the present field in the message 5, and if verification fails, then discarding the message; otherwise, verifying validity of the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, and if verification fails, then discarding the message; otherwise, verifying validity of the signature [N_{AR}, Cert_{AIK-AC}, Re_{AIK-AC}, PCRs_{AC}, Parm_{P-AC}, Eval_{IMVs-AC}, Re_{IMVs-AC}, Rem_{IMVs-AR}, Cert_{User-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text7, and if verification fails, then discarding the message; otherwise, generating a platform level evaluation result Re_{P-AC} of platform integrity of the access controller from the integrity verifier level evaluation result Re_{IMVs-AC} of platform integrity of the access controller, generating a platform authentication result of the access controller from the verification result Re_{AIK-AC} of the platform identity certificate of the access controller and the platform level evaluation result Re_{P-AC} of platform integrity of the access controller, and next generating an access decision of the access requester for the access controller from the platform authentication result of the access controller and the verification result Re_{User-AR} of the user identity certificate of the access controller, and finally generating a session key between the access requester and the access controller by the access controller from the key data g^{x} of the access requester, the key data g^{y} of the access controller and the ECDH parameter Parm_{ECDH} for key negotiation.

The step 2) includes: upon reception of the message 1, firstly extracting by the access requester a corresponding platform configuration register value PCRs_{AR} of the access requester, a platform integrity measurement log Log_{AR} of the access requester and a signature [N_{AC}, PCRs_{AR}]_{Sig-ARP} performed with a private key corresponding to a platform identity certificate of the access requester on the authentication identifier N_{AC} of the access controller and the platform configuration register value PCRs_{AR} of the access requester according to the platform integrity measurement information Parm_{P-AR} requested by the access controller from the access requester, and then transmitting to the access controller a message 2 including the platform configuration register value PCRs_{AR} of the access requester, the platform integrity measurement log Log_{AR} of the access requester, the signature [N_{AC}, PCRs_{AR}]_{Sig-ARP} performed with the private key corresponding to the platform identity certificate Cert_{AIK-AR} of the access requester on the authentication identifier N_{AC} of the access controller and the platform configuration register value PCRs_{AR} of the access requester, a challenge N_{AR} of the access requester, the platform identity certificate Cert_{AIK-AR} of the access requester, platform integrity measurement information Parm_{P-AC} requested by the access requester from the access controller, a platform level evaluation policy Eval_{P-AC} of platform integrity of the access requester for the access controller, key data g^{x} of the access requester, a user identity certificate Cert_{User-AR} of the access requester, the ECDH parameter Parm_{ECDH} for key negotiation, another parameter Text2, and a signature [N_{AC}, PCRs_{AR}, Log_{AR}, [N_{AC}, PCRS_{AR}]_{Sig-ARP}, N_{AR}, Cert_{AIK-AR}, Parm_{P-AC}, Eval_{P-AC}, g^{x}, Cert_{User-AR}, Parm_{ECDH,} another parameter Text2]_{Sig-ARU} performed with a private key corresponding to the user identity certificate Cert_{User-AR} of the access requester on the other fields except for the present field in the message 2.

The step 3) includes: upon reception of the message 2, firstly verifying by the access controller validity of the signature [N_{AC}, PCRs_{AR}, Log_{AR}, [N_{AC}, PCRs_{AR}]_{Sig-ARP}, N_{AR}, Cert_{AIK-AR}, Parm_{P-AC}, Eval_{P-AC}, g^{x}, Cert_{User-AR}, Parm_{ECDH}, another parameter Text2]_{Sig-ARU} performed with the private key corresponding to the user identity certificate Cert_{User-AR} of the access requester on the other fields except for the present field in the message 2, and if verification fails, then discarding the message; otherwise, verifying validity of the signature [N_{AC}, PCRs_{AR}]_{Sig-ARP} performed with the private key corresponding to the platform identity certificate Cert_{AIK-AR} of the access requester on the authentication identifier N_{AC} of the access controller and the platform configuration register value PCRs_{AR} of the access requester, and if verification fails, then discarding the message; otherwise, extracting a corresponding platform configuration register value PCRs_{AC} of the access controller, a platform integrity measurement log Log_{AC} of the access controller and a signature [N_{AR}, PCRs_{AC}]_{Sig-ACP} performed with a private key corresponding to the platform identity certificate Cert_{AIK-AC} of the access controller on the challenger N_{AR} of the access requester and the platform configuration register value PCRs_{AC} of the access controller according to the platform integrity measurement information Parm_{P-AC} requested by the access requester from the access controller, and then transmitting to the policy manager a message 3 including a challenger N_{AC-PM} of the access controller, the challenger N_{AR} of the access requester, the platform identity certificate Cert_{AIK-AR} of the access requester, the platform identity certificate Cert_{AIK}-_{AC} of the access controller, the platform configuration register value PCRs_{AR} of the access requester, the platform integrity measurement log Log_{AR} of the access requester, the platform configuration register value PCRs_{AC} of the access controller, the platform integrity measurement log Log_{AC} of the access controller, the platform integrity measurement information Parm_{P-AR} requested by the access controller from the access requester, a platform level evaluation policy Eval_{P-AR} of platform integrity of the access controller for the access requester, the platform integrity measurement information Parm_{P-AC} requested by the access requester from the access controller, the platform level evaluation policy Eval_{P-AC} of platform integrity of the access requester for the access controller, a concatenation value ADDID of MAC addresses of the access requester and the access controller, the user identity certificate Cert_{User-AR} of the access requester, the user identity certificate Cert_{User-AC} of the access controller, and another parameter Text3.

The step 4) includes: upon reception of the message 3, firstly generating by the policy manager a verification result Re_{User-AR} of the user identity certificate of the access requester and a verification result Re_{User-AC} of the user identity certificate of the access controller and then generating a verification result Re_{AIK-AR} of the platform identity certificate of the access requester and a verification result Re_{AIK-AC} of the platform identity certificate of the access controller; and if the platform identity certificate of the access requester is valid, then generating a platform level evaluation result Re_{P-AR} of platform integrity of the access requester and platform level remediation information Rem_{P-AR} of platform integrity of the access requester, and if the platform identity certificate of the access controller is valid, then generating a platform level evaluation result Re_{P-AC} of platform integrity of the access controller and platform level remediation information Rem_{P-AC} of platform integrity of the access controller, and finally transmitting a message 4 to the access controller, where the message 4 is constituted in two forms: in a first form, the message 4 includes the verification result Re_{AIK-AR} of the platform identity certificate of the access requester, the platform level evaluation result Re_{P-AR} of platform integrity of the access requester, the platform level remediation information Rem_{P-AR} of platform integrity of the access requester, the verification result Re_{AIK-AC} of the platform identity certificate of the access controller, the platform level evaluation result Re_{P-AC} of platform integrity of the access controller, the platform level remediation information Rem_{P-AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR}, Eval_{P-AR}, Re_{P-AR}, Rem_{P-AC}, Cert_{User-AR}, Re_{User-AR}, N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC}, another parameter Text6]_{Sig-PMU} performed with a private key corresponding to a user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text6, and another parameter Text4; and in the second form, the message 4 includes the verification result Re_{AIK-AR} of the platform identity certificate of the access requester, the platform level evaluation result Re_{P-AR} of platform integrity of the access requester, the platform level remediation information Rem_{P-AR} of platform integrity of the access requester, the verification result Re_{AIK-AC} of the platform identity certificate of the access controller, the platform level evaluation result Re_{P-AC} of platform integrity of the access controller, the platform level remediation information Rem_{P-AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR}, Eval_{P-AR}, Re_{P-AR}, Rem_{P-AC}, Cert_{User-AR}, Re_{User-AR}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{user-AR} of the user identity certificate of the access requester and another parameter Text6, a signature [N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text7, and another parameter Text4.

The step 5) includes: upon reception of the message 4, if the message 4 is constituted in the first form, then firstly verifying by the access controller validity of the signature [N_{AC}-_{PM}, Cert_{AIK-AR}, Re_{AIK-AR}, PCRs_{AR}, Parm_{P-AR}, Eval_{P-AR}, Re_{P-AR}, Rem_{P-AC}, Cert_{User-AR}, Re_{User-AR}, N_{AR}, Cert_{AIK-AC}, Re_{AIK}-_{AC}, PCRs_{AC}, Parm_{P-AC}, Eval_{P-AC}, Re_{P-AC}, Rem_{P-AR}, Cert_{User-AC}, Re_{User-AC}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text6, then generating a platform authentication result of the access requester from the verification result Re_{AIK-AR} of the platform identity certificate of the access requester and the platform level evaluation result Re_{P-AR} of platform integrity of the access requester, next generating an access result Re_{access} of the access controller for the access requester from the platform authentication result of the access requester and the verification result Re_{User-AR} of the user identity certificate of the access requester, next generating key data g^{y} of the access controller and generating a session key between the access requester and the access controller from the key data g^{x} of the access requester, the key data g^{y} of the access controller and the ECDH parameter Parm_{ECDH} for key negotiation, and finally transmitting to the access requester a message 5 (constituted in a first form) including the challenger N_{AC-PM} of the access controller, the platform configuration register value PCRs_{AC} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, the platform level evaluation policy Eval_{P-AR} of platform integrity of the access controller for the access requester, the access result Re_{access} of the access controller for the access requester, a message 4', the key data g^{y} of the access controller, another parameter Text5, and a signature [N_{AR}, N_{AC-PM}, PCRs_{AC}, [N_{AR}, PCRS_{AC}]_{Sig-ACP}, Eval_{P-AR}, Re_{access}, the message 4', g^{y}, another parameter Text5] performed with the private key corresponding to the user identity certificate of the access controller on the other fields except for the present field in the message 5, where the message 4' refers to the other fields except for the concatenation value ADDID of the MAC addresses of the access requester and the access controller in the message 4; or if the message 4 is constituted in the second form, then firstly verifying validity of the signature [N_{AC-PM}, Cert_{AIK-AR}, Re_{AIK-AR}, PCRs_{AR}, Parm_{P-AR}, Eval_{P-AR}, Re_{P-AR}, Rem_{P-AC}, Cert_{User-AR}, Re_{User-AR}, another parameter Text6]_{Sig-PMU} performed with the private key corresponding to the user identity certificate Cert_{User}-_{PM} of the policy manager on the challenger N_{AC}-_{PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester and another parameter Text6, and then generating a platform authentication result of the access requester from the verification result Re_{AIK-AR} of the platform identity certificate of the access requester and the platform level evaluation result Re_{P-AR} of platform integrity of the access requester, next generating an access result Re_{access} of the access controller for the access requester from the platform authentication result of the access requester and the verification result Re_{User-AR} of the user identity certificate of the access requester, next generating key data g^{y} of the access controller and generating a session key between the access requester and the access controller from the key data g^{x} of the access requester, the key data g^{y} of the access controller and the ECDH parameter Parm_{ECDH} for key negotiation, and finally transmitting to the access requester a message 5 (constituted in a second form) including the challenger N_{AC-PM} of the access controller, the platform configuration register value PCRs_{AC} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, Re_{access}, the verification result Re_{AIK-AC} of the platform identity certificate of the access controller, the platform level evaluation result Re_{P-AC} of platform integrity of the access controller, the verification result Re_{User-AC} of the user identity certificate of the access controller, the platform level remediation information Rem_{P-AR} of platform integrity of the access requester, the key data g^{y} of the access controller, the signature [N_{AR}, Cert_{AIK-AC}, Re_{AIK-AC}, PCRs_{AC}, Parm_{P-AC}, Eval_{P-AC}, Re_{P}-_{AC}, Rem_{P-AR}, Cert_{User-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text7, another parameter Text5, and a signature [N_{AR}, N_{AC-PM}, PCRs_{AC}, [N_{AR}, PCRs_{AC}]_{Sig-ACP}, Re_{access}, Re_{AIK-AC}, Re_{P-AC}, Re_{User-AC}, Rem_{P-AR}, g^{y}, [N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC}, another parameter Text7]_{Sig-PMU}, another parameter Text5]_{Sig-ACU} performed with a private key to the user identity certificate Cert_{User-AC} of the access controller on the other fields except for the present field in the message 5.

The step 6) includes: upon reception of the message 5, if the message 5 is constituted in the first form, then firstly verifying by the access requester validity of the signature [N_{AR}, N_{AC}-_{PM}, PCRs_{AC}, [N_{AR}, PCRS_{AC}]_{Sig-ACP}, Eval_{P-AR}, Re_{access}, the message 4', g^{y}, another parameter Text5]_{Sig-ACU} performed with the private key corresponding to the user identity certificate Cert_{User-AC} of the access controller on the other fields except for the present field in the message 5, and if verification fails, then discarding the message; otherwise, verifying validity of the signature [N_{AR}, PCR_{SAC}]_{Sig-ACP} performed with the private key corresponding to the platform identity certificate Cert_{AIK}-_{AC} of the access controller on the challenger N_{AR} of the access requester and the platform configuration register value PCRs_{AC} of the access controller, and if verification fails, then discarding the message; otherwise, verifying validity of the signature [N_{AC-PM}, Cert_{AIK-AR}, Re_{AIK-AR}, PCRs_{AR}, Parm_{P-AR}, Eval_{P-AR}, Re_{P-AR}, Rem_{P-AC}, Cert_{User-AR}, Re_{User-AR}, N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text6 in the message 4', and if verification fails, then discarding the message; otherwise, generating a platform authentication result of the access controller from the verification result Re_{AIK-AC} of the platform identity certificate of the access controller and the platform level evaluation result Re_{P-AC} of platform integrity of the access controller, and next generating an access decision of the access requester for the access controller from the platform authentication result of the access controller and the verification result Re_{User-AR} of the user identity certificate of the access controller, and finally generating a session key between the access requester and the access controller by the access controller, from the key data g^{x} of the access requester, the key data g^{y} of the access controller and the ECDH parameter Parm_{ECDH} for key negotiation; or if the message 5 is constituted in the second form, then firstly verifying validity of the signature [N_{AR}, N_{AC-PM}, PCRs_{AC}, [N_{AR}, PCRs_{AC}]_{Sig-ACP}, Re_{access}, Re_{AIK-AC}, Re_{P-AR}, Re_{User-AC}, Rem_{P-AR}, g^{y}, [N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC}, another parameter Text7]_{Sig-PMU}, another parameter Text5]_{Sig-ACU} performed with the private key to the user identity certificate Cert_{User-AC} of the access controller on the other fields except for the present field in the message 5, and if verification fails, then discarding the message; otherwise, verifying validity of the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, and if verification fails, then discarding the message; otherwise, verifying validity of the signature [N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text7, and if verification fails, then discarding the message; otherwise, generating a platform authentication result of the access controller from the verification result Re_{AIK-AC} of the platform identity certificate of the access controller and the platform level evaluation result Re_{P-AC} of platform integrity of the access controller, and next generating an access decision of the access requester for the access controller from the platform authentication result of the access controller and the verification result Re_{User-AR} of the user identity certificate of the access controller, and finally generating a session key between the access requester and the access controller by the access controller, from the key data g^{x} of the access requester, the key data g^{y} of the access controller and the ECDH parameter Parm_{ECDH} for key negotiation.

The invention can also be applicable to trusted communication between peer entities particularly in the following steps:

When an access requester is connected to a network through an access controller, if the access requester requires trusted communication with another access requester in the network, then the access requester, the other access requester and a policy manager perform the trusted network connect handshake method based on Tri-element Peer Authentication according to the invention to perform user identity authentication and platform authentication between the access requester and the other access requester, thus guaranteeing trusted communication between the access requester and the other access requester, where either the access requester or the other access requester can play the role of the access requester or of the access controller in the trusted network connect handshake method based on Tri-element Peer Authentication according to the invention.

The invention can also be applicable to trusted management on an entity particularly in the following steps:

When a policy manager requires trusted management on an access controller and respective access requesters in a network, if the policy manager requires trusted management on one of the access requesters in the network, then the access requester and the policy manager perform the trusted network connect handshake method based on Tri-element Peer Authentication according to the invention to perform user identity authentication and platform authentication on the access requester by the policy manager, where the access requester plays the role of the access requester in the trusted network connect handshake method based on Tri-element Peer Authentication according to the invention, and the policy manager plays the roles of the access controller and of the policy manager in the trusted network connect handshake method based on Tri-element Peer Authentication according to the invention; or if the policy manager requires trusted management on the access controller in the network, then the access requester and the policy manager perform the trusted network connect handshake method based upon Tri-element Peer Authentication according to the invention to perform user identity authentication and platform authentication on the access controller by the policy manager, where the access controller plays the role of the access requester in the trusted network connect handshake method based on Tri-element Peer Authentication according to the invention, and the policy manager plays the roles of the access controller and of the policy manager in the trusted network connect handshake method based on Tri-element Peer Authentication according to the invention.

The invention has the following advantages:

1. The invention executes Tri-element Peer Authentication Protocol for the access requester, the access controller and the policy manager to enhance the security of the trusted network connect handshake method.

2. With one round of the protocol executed on the access requester, the access controller and the policy manager, the invention can perform bidirectional user identity authentication and platform integrity evaluation and even session key negotiation between the access requester and the access controller to improve efficiency the of the trusted network connect handshake method.

3. The invention can be applicable to a trusted network connection of an entity, to trusted communication between peer entities and to trusted management on an entity to improve the applicability of the trusted network connect handshake method based on Tri-element Peer Authentication.

### Brief Description of the Drawings

Fig.1 is a trusted network connection framework based on Tri-element Peer Authentication;

Fig.2 is a first method for implementing the invention in a first mode;

Fig.3 is a second method for implementing the invention in the first mode;

Fig.4 is a first method for implementing the invention in a second mode; and

Fig.5 is a second method for implementing the invention in the second mode.

### Detailed Description of the Invention

A trusted network connect handshake method based on Tri-element Peer Authentication is performed in two modes.

In a first mode:

An access requester, an access controller and a policy manager execute one round of Tri-element Peer Authentication based protocol to perform user identity authentication and platform authentication (including platform identity verification and platform integrity evaluation) between the access requester and the access controller, where the policy manager is responsible for user identity certificate verification, platform identity certificate verification and integrity verifier level evaluation of platform integrity, of the access requester and the access controller.

After executing one round of the protocol, the access requester firstly generates a platform level evaluation result of platform integrity of the access controller from an integrity verifier level evaluation result of platform integrity of the access controller, then generates a platform authentication result of the access controller from a verification result of a platform identity certificate of the access controller and the platform level evaluation result of platform integrity of the access controller, and finally generates an access decision of the access requester for the access controller from a verification result of a user identity certificate of the access controller and the platform authentication result of the access controller.

After executing one round of the protocol, the access controller firstly generates a platform level evaluation result of platform integrity of the access requester from an integrity verifier level evaluation result of platform integrity of the access requester, then generates a platform authentication result of the access requester from a verification result of a platform identity certificate of the access requester and the platform level evaluation result of platform integrity of the access requester, and finally generates an access result of the access controller for the access requester from a verification result of a user identity certificate of the access requester and the platform authentication result of the access requester.

After executing one round of the protocol, the access requester and the access controller can further negotiate about a session key between the access requester and the access controller.

In a second mode:

An access requester, an access controller and a policy manager execute one round of the Tri-element Peer Authentication based Protocol to perform user identity authentication and platform authentication (including platform identity verification and platform integrity evaluation) between the access requester and the access controller, where the policy manager is responsible for user identity certificate verification, platform identity certificate verification and platform level evaluation of platform integrity, of the access requester and the access controller.

After executing one round of the protocol, the access requester firstly generates a platform authentication result of the access controller from a verification result of a platform identity certificate of the access controller and a platform level evaluation result of platform integrity of the access controller, and then generates an access decision of the access requester for the access controller from a verification result of a user identity certificate of the access controller and the platform authentication result of the access controller.

After executing one round of the protocol, the access controller firstly generates a platform authentication result of the access requester from a verification result of a platform identity certificate of the access requester and a platform level evaluation result of platform integrity of the access requester, and then generates an access decision of the access controller for the access requester from a verification result of a user identity certificate of the access requester and the platform authentication result of the access requester.

After executing one round of the protocol, the access requester and the access controller can further negotiate about a session key between the access requester and the access controller.

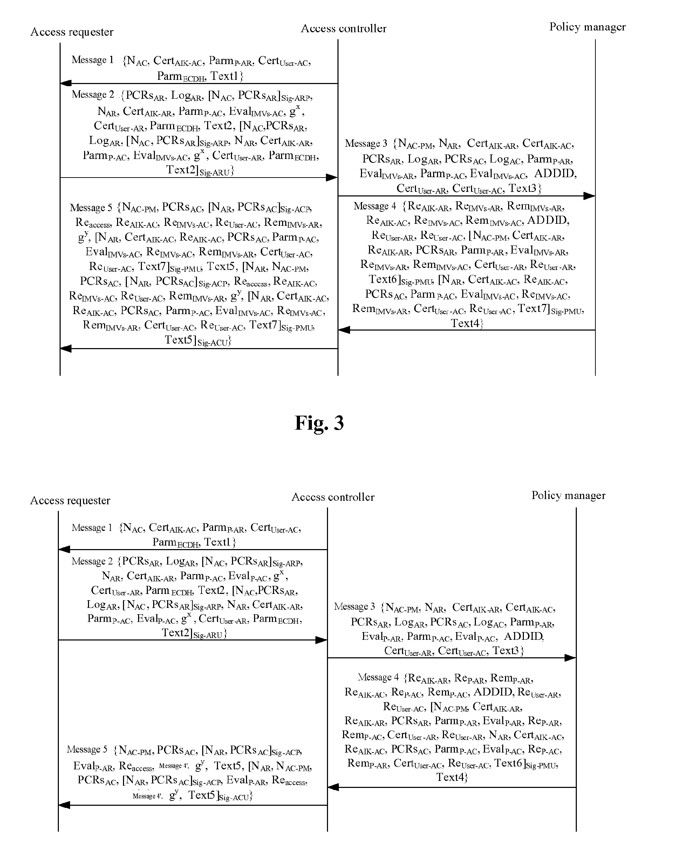

Referring to Fig.2 and Fig.3, the invention includes in the first mode the following steps:

1) The access controller transmits to the access requester a message 1 including an authentication identifier N_{AC} of the access controller, a platform identity certificate Cert_{AIK-AC} of the access controller, platform integrity measurement information Parm_{P-AR} requested by the access controller from the access requester, a user identity certificate Cert_{User-AC} of the access controller, an ECDH parameter Parm_{ECDH} for key negotiation, and another parameter Text 1 ;

2) Upon reception of the message 1, the access requester firstly extracts a corresponding platform configuration register value PCRs_{AR} of the access requester, a platform integrity measurement log Log_{AR} of the access requester and a signature [N_{AC}, PCRs_{AR}]_{Sig-ARP} performed with a private key corresponding to a platform identity certificate of the access requester on the authentication identifier N_{AC} of the access controller and the platform configuration register value PCRs_{AR} of the access requester according to the platform integrity measurement information Parm_{P-AR} requested by the access controller from the access requester, and then transmits to the access controller a message 2 including the platform configuration register value PCRs_{AR} of the access requester, the platform integrity measurement log Log_{AR} of the access requester, the signature [N_{AC}, PCRs_{AR}]_{Sig-ARP} performed with the private key corresponding to the platform identity certificate Cert_{AIK-AR} of the access requester on the authentication identifier N_{AC} of the access controller and the platform configuration register value PCRs_{AR} of the access requester, a challenge N_{AR} of the access requester, the platform identity certificate Cert_{AIK-AR} of the access requester, platform integrity measurement information Parm_{P-AC} requested by the access requester from the access controller, an integrity verifier level evaluation policy Eval_{IMVs-AC} of platform integrity of the access requester for the access controller, key data g^{x} of the access requester, a user identity certificate Cert_{User-AR} of the access requester, the ECDH parameter Parm_{ECDH} for key negotiation, another parameter Text2, and a signature [N_{AC}, PCR_{SAR}, Log_{AR}, [N_{AC}, PCRS_{AR}]_{Sig-ARP}, N_{AR}, Cert_{AIK-AR}, Parm_{P-AC}, Eval_{IMVs-AC} g^{x}, Cert_{User-AR}, Parm_{ECDH}, another parameter Text2]_{Sig-ARU} performed with a private key corresponding to the user identity certificate Cert_{User-AR} of the access requester on the other fields except for the present field in the message 2;

3) Upon reception of the message 2, the access controller firstly verifies validity of the signature [N_{AC}, PCRs_{AR}, Log_{AR}, [N_{AC}, PCRS_{AR}]_{Sig-ARP}, N_{AR}, Cert_{AIK-AR}, Parm_{P-AC}, Eval_{IMVs-AC}, g^{x}, Cer_{User-AR}, Parm_{ECDH}, another parameter Text2]_{Sig-ARU} performed with the private key corresponding to the user identity certificate Cert_{User-AR} of the access requester on the other fields except for the present field in the message 2, and if verification fails, then the access controller discards the message; otherwise, it verifies validity of the signature [N_{AC}, PCRs_{AR}]_{Sig-ARP} performed with the private key corresponding to the platform identity certificate Cert_{AIK-AR} of the access requester on the authentication identifier N_{AC} of the access controller and the platform configuration register value PCRs_{AR} of the access requester, and if verification fails, then the access controller discards the message; otherwise, it extracts a corresponding platform configuration register value PCRs_{AC} of the access controller, a platform integrity measurement log Log_{AC} of the access controller and a signature [N_{AR}, PCRs_{AC}]_{Sig-ACP} performed with a private key corresponding to the platform identity certificate Cert_{AIK-AC} of the access controller on the challenger N_{AR} of the access requester and the platform configuration register value PCRs_{AC} of the access controller according to the platform integrity measurement information Parm_{P-AC} requested by the access requester from the access controller, and then transmits to the policy manager a message 3 including a challenger N_{AC-PM} of the access controller, the challenger N_{AR} of the access requester, the platform identity certificate Cert_{AIK-AR} of the access requester, the platform identity certificate Cert_{AIK-AC} of the access controller, the platform configuration register value PCRs_{AR} of the access requester, the platform integrity measurement log Log_{AR} of the access requester, the platform configuration register value PCRs_{AC} of the access controller, the platform integrity measurement log Log_{AC} of the access controller, the platform integrity measurement information Parm_{P-AR} requested by the access controller from the access requester, an integrity verifier level evaluation policy Eval_{IMVs-AR} of platform integrity of the access controller for the access requester, the platform integrity measurement information Parm_{P-AC} requested by the access requester from the access controller, the integrity verifier level evaluation policy Eval_{IMVs-AC} of platform integrity of the access requester for the access controller, a concatenation value ADDID of MAC addresses of the access requester and the access controller, the user identity certificate Cert_{User-AR} of the access requester, the user identity certificate Cert_{User-AC} of the access controller, and another parameter Text3;

4) Upon reception of the message 3, the policy manager firstly generates a verification result Re_{User-AR} of the user identity certificate of the access requester and a verification result Re_{User-AC} of the user identity certificate of the access controller; and then generates a verification result Re_{AIK-AR} of the platform identity certificate of the access requester and a verification result Re_{AIK-AC} of the platform identity certificate of the access controller; and if the platform identity certificate of the access requester is valid, then the policy manager generates an integrity verifier level evaluation result Re_{IMVs-AR} of platform integrity of the access requester and integrity verifier level remediation information Rem_{IMVs-AR} of platform integrity of the access requester, and if the platform identity certificate of the access controller is valid, then the policy manager generates an integrity verifier level evaluation result Re_{IMVs-Ac} of platform integrity of the access controller and integrity verifier level remediation information Rem_{IMVs-AC} of platform integrity of the access controller, and finally transmits a message 4 to the access controller, where the message 4 is constituted in two forms. In a first form, the message 4 includes the verification result Re_{AIK-AR} of the platform identity certificate of the access requester, the integrity verifier level evaluation result Re_{IMVs-AR} of platform integrity of the access requester, the integrity verifier level remediation information Rem_{IMVs-AR} of platform integrity of the access requester, the verification result Re_{AIK-AC} of the platform identity certificate of the access controller, the integrity verifier level evaluation result Re_{IMVs-AC} of platform integrity of the access controller, the integrity verifier level remediation information Rem_{IMVs-AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR}, Eval_{IMVs-AR}, Re_{IMVs-AR}, Rem_{IMVs-AC}, Cert_{User-AR}, Re_{User-AR}, N_{AR}, Cert_{AIK-AC}, Re_{AIK-AC}, PCRs_{AC}, Parm_{P-AC}, Eval_{IMVs-AC}, Re_{IMVs-AC}, Rem_{IMVs-AR}, Cert_{User-AC}, Re_{User-AC}, another parameter Text6]_{Sig-PMU} performed with a private key corresponding to a user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text6, and another parameter Text4; and in the second form, the message 4 includes the verification result Re_{AIK-AR} of the platform identity certificate of the access requester, the integrity verifier level evaluation result Re_{IMVs-AR} of platform integrity of the access requester, the integrity verifier level remediation information Rem_{IMVs-AR} of platform integrity of the access requester, the verification result Re_{AIK-AC} of the platform identity certificate of the access controller, the integrity verifier level evaluation result Re_{IMVs-AC} of platform integrity of the access controller, the integrity verifier level remediation information Rem_{IMVs-AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR}, EVal_{IMVs-AR}, Re_{IMVs-AR}, Rem_{IMVs-AC}, Cert_{User-AR}, Re_{User-AR}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester and another parameter Text6, a signature [N_{AR}, Cert_{AIK-AC}, Re_{AIK-AC}, PCRs_{AC}, Parm_{P-AC}, Eval_{IMVs-AC}, Re_{IMVs-AC}, ReM_{IMVs-AR}, Cert_{User-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parmp-_{AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text7, and another parameter Text4;

5) Upon reception of the message 4, if the message 4 is constituted in the first form, then the access controller firstly verifies validity of the signature [N_{AC-PM}, Cert_{AIK-AR}, Re_{AIK-AR}, PCRs_{AR}, Parm_{P-AR}, Eval_{IMVs-AR}, Re_{IMVs-AR}, Rem_{IMVs-AC}, Cert_{User-AR}, Re_{User-AR}, N_{AR}, Cert_{AIK-AC}, Re_{AIK-AC}, PCRs_{AC}, Parm_{P-AC}, Eval_{IMVs-AC}, Re_{IMVs-AC}, Rem_{IMVs-AR}, Cert_{User-AC}, Re_{User-AC}, another parameter Te_{X}t6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{Ac} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text6, then generates a platform level evaluation result Re_{P-AR} of platform integrity of the access requester from the integrity verifier level evaluation result Re_{IMVs-AR} of platform integrity of the access requester, generates a platform authentication result of the access requester from the verification result Re_{AIK-AR} of the platform identity certificate of the access requester and the platform level evaluation result Re_{P-AR} of platform integrity of the access requester, next generates an access result Re_{access} of the access controller for the access requester from the platform authentication result of the access requester and the verification result Re_{User-AR} of the user identity certificate of the access requester, next generates key data g^{y} of the access controller and generates a session key between the access requester and the access controller from the key data g^{x} of the access requester, the key data g^{y} of the access controller and the ECDH parameter Parm_{ECDH} for key negotiation, and finally transmits to the access requester a message 5 (constituted in a first form) including the challenger N_{AC-PM} of the access controller, the platform configuration register value PCRs_{AC} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, the integrity verifier level evaluation policy Eval_{IMVs-AR} of platform integrity of the access controller for the access requester, the access result Re_{access} of the access controller for the access requester, a message 4', the key data g^{y} of the access controller, another parameter Text5, and a signature [N_{AR}, N_{AC-PM}, PCRs_{AC}, [N_{AR}, PCRs_{AC}]_{Sig-ACP}, Eval_{IMVs-AR}, Re_{access}, the message 4', g^{y}, another parameter Text5]_{Sig-ACU} performed with the private key corresponding to the user identity certificate of the access controller on the other fields except for the present field in the message 5, where the message 4' refers to the other fields except for the concatenation value ADDID of the MAC addresses of the access requester and the access controller in the message 4; or if the message 4 is constituted in the second form, then the access controller firstly verifies validity of the signature [N_{AC-PM}, Cert_{AIK-AR}, Re_{AIK-AR}, PCRs_{AR}, Parm_{P-AR}, EVal_{IMVs-AR}, Re_{IMVs-AR}, ReM_{IMVs-AC}, Cer_{User-AR}, Re_{User-AR}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester and another parameter Text6, and then generates a platform level evaluation result Re_{P-AR} of platform integrity of the access requester from the integrity verifier level evaluation result Re_{IMVs-AR} of platform integrity of the access requester, generates a platform authentication result of the access requester from the verification result Re_{AIK-AR} of the platform identity certificate of the access requester and the platform level evaluation result Re_{P-AR} of platform integrity of the access requester, next generates an access result Re_{access} of the access controller for the access requester from the platform authentication result of the access requester and the verification result Re_{User-AR} of the user identity certificate of the access requester, next generates key data g^{y} of the access controller and generates a session key between the access requester and the access controller from the key data g^{x} of the access requester, the key data g^{y} of the access controller and the ECDH parameter Parm_{ECDH} for key negotiation, and finally transmits to the access requester a message 5 (constituted in a second form) including the challenger N_{AC-PM} of the access controller, the platform configuration register value PCRs_{AC} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, Re_{access}, the verification result Re_{AIK-AC} of the platform identity certificate of the access controller, the integrity verifier level evaluation result Re_{IMVs-AC} of platform integrity of the access controller, the verification result Re_{User-AC} of the user identity certificate of the access controller, the integrity verifier level remediation information Rem_{IMVs-AR} of platform integrity of the access requester, the key data g^{y} of the access controller, the signature [N_{AR}, Cert_{AIK-AC}, Re_{AIK-AC}, PCRs_{AC}, Parm_{P-AC}, Eval_{IMVs-AC}, Re_{IMVs-AC}, ReM_{IMVs-AR}, Cert_{User-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text7, another parameter Text5, and a signature [N_{AR}, N_{AC-PM}, PCRs_{AC}, [N_{AR}, PCRs_{AC}]_{Sig-ACP}, Re_{access}, Re_{AIK-AC}, Re_{IMVs-AC}, Re_{User-AC}, ReM_{IMVs-AR}, g^{y}, [N_{AR}, Cert_{AIK-AC}, Re_{AIK-AC}, PCRs_{AC}, Parm_{P-AC}, Eval_{IMVs-AC}, Re_{IMVs-AC}, Rem_{IMVs-AR}, Cert_{User-AC}, Re_{User-AC}, another parameter Text7]_{Sig-PMU}, another parameter Text5]_{Sig-ACU} performed with a private key corresponding to the user identity certificate Cert_{User-AC} of the access controller on the other fields except for the present field in the message 5;

6) Upon reception of the message 5, if the message 5 is constituted in the first form, then the access requester firstly verifies validity of the signature [N_{AR}, N_{AC-PM}, PCRs_{AC}, [N_{AR}, PCRs_{AC}]_{Sig-ACP}, Eval_{IMVs-AR}, Re_{access}, the message 4', g^{y}, another parameter Text5]_{Sig-ACU} performed with the private key corresponding to the user identity certificate Cert_{User-AC} of the access controller on the other fields except for the present field in the message 5, and if verification fails, then the access requester discards the message; otherwise, it verifies validity of the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, and if verification fails, then the access requester discards the message; otherwise, it verifies validity of the signature [N_{AC-PM}, Cert_{AIK-AR}, Re_{AIK-AR}, PCRs_{AR}, Parm_{P-AR}, Eval_{IMVs-AR}, Re_{IMVs-AR}, Rem_{IMVs-AC}, Cert_{User-AR}, Re_{User-AR}, N_{AR}, Cert_{AIK-AC}, Re_{AIK-AC}, PCR_{sAC}, Parm_{P-AC}, Eval_{IMVs-AC}, Re_{IMVs-AC}, Rem_{IMVs-AR}, Cert_{User-AC}, Re_{User-AC}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text6 in the message 4', and if verification fails, then the access requester discards the message; otherwise, it generates a platform level evaluation result Re_{P-AC} of platform integrity of the access controller from the integrity verifier level evaluation result Re_{IMVs-AC} of platform integrity of the access controller, generates a platform authentication result of the access controller from the verification result Re_{AIK-AC} of the platform identity certificate of the access controller and the platform level evaluation result Re_{P-AC} of platform integrity of the access controller, and next generates an access decision of the access requester for the access controller from the platform authentication result of the access controller and the verification result Re_{User-AR} of the user identity certificate of the access controller, and finally the access controller generates a session key between the access requester and the access controller from the key data g^{x} of the access requester, the key data g^{y} of the access controller and the ECDH parameter Parm_{ECDH} for key negotiation; or if the message 5 is constituted in the second form, then the access requester firstly verifies validity of the signature [N_{AR}, N_{AC-PM}, PCRs_{AC}, [N_{AR}, PCRs_{AC}]_{Sig-ACP}, Re_{access}, Re_{AIK-AC}, Re_{IMVs-AC}, Re_{User-AC,} Rem_{IMVs-AR}, g^{y}, [NAR, Cert_{AIK-AC}, Re_{AIK}-_{AC,} PCRs_{AC}, Parm_{P-AC}, EVal_{IMVs-AC}, Re_{IMVs-AC}, Rem_{IMVs-AR}, Cert_{User-AC}, Re_{User-AC}, another parameter Text7]_{Sig-PMU}, another parameter Text5]_{Sig-ACU} performed with the private key corresponding to the user identity certificate Cert_{User-AC} of the access controller on the other fields except for the present field in the message 5, and if verification fails, then the access requester discards the message; otherwise, it verifies validity of the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, and if verification fails, then the access requester discards the message; otherwise, it verifies validity of the signature [N_{AR}, Cert_{AIK-AC}, Re_{AIK-AC}, PCRs_{AC}, Parm_{P-AC}, Eval_{IMVs-AC}, Re_{IMVS-AC}, Rem_{IMVs-AR}, Cert_{User-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text7, and if verification fails, then the access requester discards the message; otherwise, it generates a platform level evaluation result Re_{P-AC} of platform integrity of the access controller from the integrity verifier level evaluation result Re_{IMVs-AC} of platform integrity of the access controller, generates a platform authentication result of the access controller from the verification result Re_{AIK-AC} of the platform identity certificate of the access controller and the platform level evaluation result Re_{P-AC} of platform integrity of the access controller, and next generates an access decision of the access requester for the access controller from the platform authentication result of the access controller and the verification result Re_{User-AR} of the user identity certificate of the access controller, and finally the access controller generates a session key between the access requester and the access controller from the key data g^{x} of the access requester, the key data g^{y} of the access controller and the ECDH parameter Parm_{ECDH} for key negotiation.

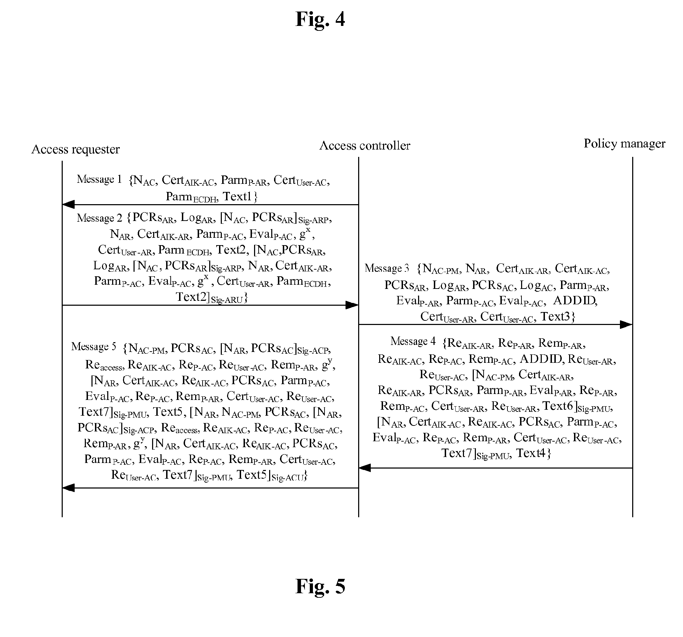

Referring to Fig.4 and Fig.5, the invention includes in the second mode the following steps:

1) The access controller transmits to the access requester a message 1 including an authentication identifier N_{AC} of the access controller, a platform identity certificate Cert_{AIK-AC} of the access controller, platform integrity measurement information Parm_{P-AR} requested by the access controller from the access requester, a user identity certificate Cert_{User-AC} of the access controller, an ECDH parameter Parm_{ECDH} for key negotiation, and another parameter Text1;

2) Upon reception of the message 1, the access requester firstly extracts a corresponding platform configuration register value PCRs_{AR} of the access requester, a platform integrity measurement log Log_{AR} of the access requester and a signature [N_{AC}, PCRs_{AR}]_{Sig-ARP} performed with a private key corresponding to a platform identity certificate of the access requester on the authentication identifier N_{AC} of the access controller and the platform configuration register value PCRs_{AR} of the access requester according to the platform integrity measurement information Parm_{P-AR} requested by the access controller from the access requester, and then transmits to the access controller a message 2 including the platform configuration register value PCRs_{AR} of the access requester, the platform integrity measurement log Log_{AR} of the access requester, the signature [N_{AC}, PCRs_{AR}]_{Sig-ARP} performed with the private key corresponding to the platform identity certificate Cert_{AIK-AR} of the access requester on the authentication identifier N_{AC} of the access controller and the platform configuration register value PCRs_{AR} of the access requester, a challenge N_{AR} of the access requester, the platform identity certificate Cert_{AIK-AR} of the access requester, platform integrity measurement information Parm_{P-AC} requested by the access requester from the access controller, a platform level evaluation policy Eval_{P-AC} of platform integrity of the access requester for the access controller, key data g^{x} of the access requester, a user identity certificate Cert_{User-AR} of the access requester, the ECDH parameter Parm_{ECDH} for key negotiation, another parameter Text2, and a signature [N_{AC}, PCRs_{AR}, Log_{AR}, [N_{AC}, PCRs_{AR}]_{Sig-ARP}, N_{AR}, Cert_{AIK-AR}, Parm_{P-AC}, Eval_{P-AC}, g^{x}, Cert_{User-AR}, Parm_{ECDH}, another parameter Text2]_{Sig-ARU} performed with a private key corresponding to the user identity certificate Cert_{User-AR} of the access requester on the other fields except for the present field in the message 2;

3) Upon reception of the message 2, the access controller firstly verifies validity of the signature [N_{AC}, PCRs_{AR}, Log_{AR}, [N_{AC}, PCRs_{AR}]_{Sig-ARP}, N_{AR}, Cert_{AIK-AR}, Parm_{P-AC}, Eval_{P-AC}, g^{x}, Cert_{User-AR}, Parm_{ECDH}, another parameter Text2]_{Sig-ARU} performed with the private key corresponding to the user identity certificate Cert_{User-AR} of the access requester on the other fields except for the present field in the message 2, and if verification fails, then the access controller discards the message; otherwise, it verifies validity of the signature [N_{AC}, PCRs_{AR}]_{Sig-ARP} performed with the private key corresponding to the platform identity certificate Cert_{AIK-AR} of the access requester on the authentication identifier N_{AC} of the access controller and the platform configuration register value PCRs_{AR} of the access requester, and if verification fails, then the access controller discards the message; otherwise, it extracts a corresponding platform configuration register value PCRs_{AC} of the access controller, a platform integrity measurement log Log_{AC} of the access controller and a signature [N_{AR}, PCRs_{AC}]_{Sig-ACP} performed with a private key corresponding to the platform identity certificate Cert_{AIK-AC} of the access controller on the challenger N_{AR} of the access requester and the platform configuration register value PCRs_{AC} of the access controller according to the platform integrity measurement information Parm_{P-AC} requested by the access requester from the access controller, and then transmits to the policy manager a message 3 including a challenger N_{AC-PM} of the access controller, the challenger N_{AR} of the access requester, the platform identity certificate Cert_{AIK-AR} of the access requester, the platform identity certificate Cert_{AIK-AC} of the access controller, the platform configuration register value PCRs_{AR} of the access requester, the platform integrity measurement log Log_{AR} of the access requester, the platform configuration register value PCRs_{AC} of the access controller, the platform integrity measurement log Log_{AC} of the access controller, the platform integrity measurement information Parm_{P-AR} requested by the access controller from the access requester, a platform level evaluation policy Eval_{P-AR} of platform integrity of the access controller for the access requester, the platform integrity measurement information Parm_{P-AC} requested by the access requester from the access controller, the platform level evaluation policy Eval_{P-AC} of platform integrity of the access requester for the access controller, a concatenation value ADDID of MAC addresses of the access requester and the access controller, the user identity certificate Cert_{User-AR} of the access requester, the user identity certificate Cert_{User-AC} of the access controller, and another parameter Text3;

4) Upon reception of the message 3, the policy manager firstly generates a verification result Re_{User-AR} of the user identity certificate of the access requester and a verification result Re_{User-AC} of the user identity certificate of the access controller and then generates a verification result Re_{AIK-AR} of the platform identity certificate of the access requester and a verification result Re_{AIK-AC} of the platform identity certificate of the access controller; and if the platform identity certificate of the access requester is valid, then the policy manager generates a platform level evaluation result Re_{P-AR} of platform integrity of the access requester and platform level remediation information Rem_{P-AR} of platform integrity of the access requester, and if the platform identity certificate of the access controller is valid, then the policy manager generates a platform level evaluation result Re_{P-AC} of platform integrity of the access controller and platform level remediation information Rem_{P-AC} of platform integrity of the access controller, and finally transmits a message 4 to the access controller, where the message 4 is constituted in two forms. In a first form, the message 4 includes the verification result Re_{AIK-AR} of the platform identity certificate of the access requester, the platform level evaluation result Re_{P-AR} of platform integrity of the access requester, the platform level remediation information Rem_{P-AR} of platform integrity of the access requester, the verification result Re_{AIK-AC} of the platform identity certificate of the access controller, the platform level evaluation result Re_{P-AC} of platform integrity of the access controller, the platform level remediation information Rem_{P-AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR}, Eval_{P-AP}, Re_{P-AR}, Rem_{P-AC}, Cert_{User-AR}, Re_{User-AR}, N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC}, another parameter Text6]_{Sig-PMU} performed with a private key corresponding to a user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text6, and another parameter Text4; and in the second form, the message 4 includes the verification result Re_{AIK-AR} of the platform identity certificate of the access requester, the platform level evaluation result Re_{P-AR} of platform integrity of the access requester, the platform level remediation information Rem_{P-AR} of platform integrity of the access requester, the verification result Re_{AIK-AC} of the platform identity certificate of the access controller, the platform level evaluation result Re_{P-AC} of platform integrity of the access controller, the platform level remediation information Rem_{P-AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR}, Eval_{P-AR}, Re_{P-AR}, Rem_{P}-_{AC}, Cert_{User-AR}, Re_{User-AR}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester and another parameter Text6, a signature [N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text7, and another parameter Text4;

5) Upon reception of the message 4, if the message 4 is constituted in the first form, then the access controller firstly verifies validity of the signature [N_{AC-PM}, Cert_{AIK-AR}, Re_{AIK-AR}, PCRs_{AR}, Parm_{P-AR}, Eval_{P-AR}, Re_{P-AR}, Rem_{P-AC}, Cert_{User-AR}, Re_{User-AR}, N_{AR}, Cert_{AIK-AC}, Re_{AIK-AC}, PCRs_{AC}, Pam_{P-AC}, Eval_{P-AC}, Re_{P-AC}, Rem_{P-AR}, Cert_{User-AC}, Re_{User-AC}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text6, then generates a platform authentication result of the access requester from the verification result Re_{AIK-AR} of the platform identity certificate of the access requester and the platform level evaluation result Re_{P-AR} of platform integrity of the access requester, next generates an access result Re_{access} of the access controller for the access requester from the platform authentication result of the access requester and the verification result Re_{User-AR} of the user identity certificate of the access requester, next generates key data g^{y} of the access controller and generates a session key between the access requester and the access controller from the key data g^{x} of the access requester, the key data g^{y} of the access controller and the ECDH parameter Parm_{ECDH} for key negotiation, and finally transmits to the access requester a message 5 (constituted in a first form) including the challenger N_{AC-PM} of the access controller, the platform configuration register value PCRs_{AC} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, the platform level evaluation policy Eval_{P-AR} of platform integrity of the access controller for the access requester, the access result Re_{access} of the access controller for the access requester, a message 4', the key data g^{y} of the access controller, another parameter Text5, and a signature [N_{AR}, N_{AC-PM}, PCRs_{AC}, [N_{AR}, PCRs_{AC}]_{Sig-ACP}, Eval_{P-AR}, Re_{access}, the message 4', g^{y}, another parameter Text5]_{Sig-ACU} performed with the private key corresponding to the user identity certificate of the access controller on the other fields except for the present field in the message 5, where the message 4' refers to the other fields than the concatenation value ADDID of the MAC addresses of the access requester and the access controller in the message 4; or if the message 4 is constituted in the second form, then the access controller firstly verifies validity of the signature [N_{AC-PM}, Cert_{AIK-AR}, Re_{AIK-AR}, PCRs_{AR}, Parm_{P-AR}, Eval_{P-AR}, Re_{P-AR}, Rem_{P-AC}, Cert_{User-AR}, Re_{User-AR}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester and another parameter Text6, and then generates a platform authentication result of the access requester from the verification result Re_{AIK-AR} of the platform identity certificate of the access requester and the platform level evaluation result Re_{P-AR} of platform integrity of the access requester, next generates an access result Re_{access} of the access controller for the access requester from the platform authentication result of the access requester and the verification result Re_{User-AR} of the user identity certificate of the access requester, next generates key data g^{y} of the access controller and generates a session key between the access requester and the access controller from the key data g^{x} of the access requester, the key data g^{y} of the access controller and the ECDH parameter Parm_{ECDH} for key negotiation, and finally transmits to the access requester a message 5 (constituted in a second form) including the challenger N_{AC-PM} of the access controller, the platform configuration register value PCRs_{Ac} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, Re_{access}, the verification result Re_{AIK-AC} of the platform identity certificate of the access controller, the platform level evaluation result Re_{P-AC} of platform integrity of the access controller, the verification result Re_{User-AC} of the user identity certificate of the access controller, the platform level remediation information Rem_{P-AR} of platform integrity of the access requester, the key data g^{y} of the access controller, the signature [N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User}-_{AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{Ac} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text7, another parameter Text5, and a signature [N_{AR}, N_{AC-PM}, PCRs_{AC}, [N_{AR}, PCRs_{AC}]_{Sig-ACP}, Re_{access}, Re_{AIK-AC}, Re_{P-AC}, Re_{User-AC}, Rem_{P-AR}, g^{y}, [N_{AR}, Cert_{AIK-AC}, Re_{AIK-AC}, PCRs_{AC}, Parm_{P-AC}, EVal_{P-AC}, Re_{P-AC}, Rem_{P-AR}, Cert_{User-AC}, Re_{User-AC}, another parameter Text7]_{Sig-PMU}, another parameter Text5]_{Sig-ACU} performed with a private key to the user identity certificate Cert_{User-AC} of the access controller on the other fields except for the present field in the message 5;
and

6) Upon reception of the message 5, if the message 5 is constituted in the first form, then the access requester firstly verifies validity of the signature [N_{AR}, N_{AC-PM}, PCRs_{AC}, [N_{AR}, PCRs_{AC}]_{Sig-ACP}, Eval_{P-AR}, Re_{access}, the message 4', g^{y}, another parameter Text5]_{Sig-ACU} performed with the private key corresponding to the user identity certificate Cert_{User-AC} of the access controller on the other fields except for the present field in the message 5, and if verification fails, then the access requester discards the message; otherwise, it verifies validity of the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCR_{SAC} of the access controller, and if verification fails, then the access requester discards the message; otherwise, it verifies validity of the signature [N_{AC-PM}, Cert_{AIK-AR}, Re_{AIK-AR}, PCRs_{AR}, Parm_{P-AR}, Eval_{P-AR}, Re_{P-AR}, Rem_{P-AC}, Cert_{User-AR}, Re_{User-AR}, N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC,} another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text6 in the message 4', and if verification fails, then the access requester discards the message; otherwise, it generates a platform authentication result of the access controller from the verification result Re_{AIK-AC} of the platform identity certificate of the access controller and the platform level evaluation result Re_{P-AC} of platform integrity of the access controller, and next generates an access decision of the access requester for the access controller from the platform authentication result of the access controller and the verification result Re_{User-AR} of the user identity certificate of the access controller, and finally the access controller generates a session key between the access requester and the access controller from the key data g^{x} of the access requester, the key data g^{y} of the access controller and the ECDH parameter Parm_{ECDH} for key negotiation; or if the message 5 is constituted in the second form, then the access requester firstly verifies validity of the signature [N_{AR}, N_{AC-PM5} PCRs_{AC}, [N_{AR}, PCRs_{AC}]_{Sig-ACP}, Re_{access}, Re_{AIK}-_{AC}, Re_{P-AR}, Re_{User-AC}, Rem_{P-AR}, g^{y}, [N_{AR}, Cert_{AIK-AC}, Re_{AIK-AC}, PCRs_{AC}, Parm_{P-AC}, EVal_{P-AC}, Re_{P-AC}, Rem_{P-AR}, Cert_{User-AC}, Re_{User-AC}, another parameter Text7]_{Sig-PMU}, another parameter Text5]_{Sig-ACU} performed with the private key to the user identity certificate Cert_{User-AC} of the access controller on the other fields except for the present field in the message 5, and if verification fails, then the access requester discards the message; otherwise, it verifies validity of the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, and if verification fails, then the access requester discards the message; otherwise, it verifies validity of the signature [N_{AR}, Cert_{AIK-AC}, Re_{AIK-AC}, PCRs_{AC}, Parm_{P-AC}, EVal_{P-AC}, Re_{P-AC}, Rem_{P-AR}, Cert_{User-AC}, Re_{User-AC,} another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text7, and if verification fails, then the access requester discards the message; otherwise, it generates a platform authentication result of the access controller from the verification result Re_{AIK-AC} of the platform identity certificate of the access controller and the platform level evaluation result Rep-_{AC} of platform integrity of the access controller, and next generates an access decision of the access requester for the access controller from the platform authentication result of the access controller and the verification result Re_{User-AR} of the user identity certificate of the access controller, and finally the access controller can generate a session key between the access requester and the access controller from the key data g^{x} of the access requester, the key data g^{y} of the access controller and the ECDH parameter Parm_{ECDH} for key negotiation.

## Claims

1. A trusted network connect handshake method based on Tri-element Peer Authentication, comprising the steps of:
1) transmitting by an access controller to an access requester a message 1 for handshake activation comprising an authentication identifier N_{AC} of the access controller, a platform identity certificate Cert_{AIK-AC} of the access controller, platform integrity measurement information Parm_{P-AR} requested by the access controller from the access requester, a user identity certificate Cert_{User-AC} of the access controller, an ECDH parameter Parm_{ECDH} for key negotiation, and another parameter Text1 ;
2) transmitting by the access requester an access and handshake request message 2 for access handshake request to the access controller upon reception of the message 1;
3) transmitting by the access controller a message 3 for certificate authentication and integrity evaluation request to a policy manager upon reception of the message 2;
4) transmitting by the policy manager a message 4 for certificate authentication and integrity evaluation response to the access controller upon reception of the message 3;
5) transmitting by the access controller an message 5 for access handshake response to the access requester upon reception of the message 4; and
6) performing a trusted network connect handshake by the access requester upon reception of the message 5.

2. The trusted network connect handshake method based on Tri-element Peer Authentication according to claim 1, wherein the step 2) comprises: upon reception of the message 1, firstly extracting by the access requester a corresponding platform configuration register value PCR_{SAR} of the access requester, a platform integrity measurement log Log_{AR} of the access requester and a signature [N_{AC}, PCRs_{AR}]_{Sig-ARP} performed with a private key corresponding to a platform identity certificate of the access requester on the authentication identifier N_{AC} of the access controller and the platform configuration register value PCRs_{AR} of the access requester according to the platform integrity measurement information Parm_{P-AR} requested by the access controller from the access requester, and then transmitting to the access controller a message 2 comprising the platform configuration register value PCRs_{AR} of the access requester, the platform integrity measurement log Log_{AR} of the access requester, the signature [N_{AC}, PCRs_{AR}]_{Sig-ARP} performed with the private key corresponding to the platform identity certificate Cert_{AIK-AR} of the access requester on the authentication identifier N_{AC} of the access controller and the platform configuration register value PCRs_{AR} of the access requester, a challenge N_{AR} of the access requester, the platform identity certificate Cert_{AIK-AR} of the access requester, platform integrity measurement information Parm_{P-AC} requested by the access requester from the access controller, an integrity verifier level evaluation policy Eval_{IMVs-AC} of platform integrity of the access requester for the access controller, key data g^{x} of the access requester, a user identity certificate Cert_{User-AR} of the access requester, the ECDH parameter Parm_{ECDH} for key negotiation, another parameter Text2, and a signature [N_{AC}, PCRs_{AR}, Log_{AR}, [N_{AC}, PCRs_{AR}]_{Sig-ARP}, N_{AR}, Cert_{AIK-AR}, Parm_{P-AC}, EVal_{IMVs-AC}, g^{x}, Cert_{User-AR}, Parm_{ECDH}, another parameter Text2]_{Sig-ARU} performed with a private key corresponding to the user identity certificate Cert_{User-AR} of the access requester on the other fields except for the present field in the message 2.

3. The trusted network connect handshake method based on Tri-element Peer Authentication according to claim 2, wherein the step 3) comprises: upon reception of the message 2, firstly verifying by the access controller validity of the signature [N_{AC}, PCRs_{AR}, Log_{AR}, [N_{AC}, PCRs_{AR}]_{Sig-ARP}, N_{AR}, Cert_{AIK-AR}, Parm_{P-AC}, Eval_{IMVs-AC,} g^{x}, Cert_{User-AR}, Parm_{ECDH}, another parameter Text2]_{Sig-ARU} performed with the private key corresponding to the user identity certificate Cert_{User-AR} of the access requester on the other fields except for the present field in the message 2, and if verification fails, then discarding the message; otherwise, verifying validity of the signature [N_{AC}, PCRs_{AR}]_{Sig-ARP} performed with the private key corresponding to the platform identity certificate Cert_{AIK-AR} of the access requester on the authentication identifier N_{AC} of the access controller and the platform configuration register value PCRs_{AR} of the access requester, and if verification fails, then discarding the message; otherwise, extracting a corresponding platform configuration register value PCRs_{AC} of the access controller, a platform integrity measurement log Log_{AC} of the access controller and a signature [N_{AR}, PCRs_{AC}]_{Sig-ACP} performed with a private key corresponding to the platform identity certificate Cert_{AIK-AC} of the access controller on the challenger N_{AR} of the access requester and the platform configuration register value PCRs_{AC} of the access controller according to the platform integrity measurement information Parm_{P-AC} requested by the access requester from the access controller, and then transmitting to the policy manager a message 3 comprising a challenger N_{AC-PM} of the access controller, the challenger N_{AR} of the access requester, the platform identity certificate Cert_{AIK-AR} of the access requester, the platform identity certificate Cert_{AIK-AC} of the access controller, the platform configuration register value PCRs_{AR} of the access requester, the platform integrity measurement log Log_{AR} of the access requester, the platform configuration register value PCRs_{AC} of the access controller, the platform integrity measurement log Log_{AC} of the access controller, the platform integrity measurement information Parm_{P-AR} requested by the access controller from the access requester, an integrity verifier level evaluation policy Eval_{IMVs-AR} of platform integrity of the access controller for the access requester, the platform integrity measurement information Parm_{P-AC} requested by the access requester from the access controller, the integrity verifier level evaluation policy Eval_{IMVs-AC} of platform integrity of the access requester for the access controller, a concatenation value ADDID of MAC addresses of the access requester and the access controller, the user identity certificate Cert_{User-AR} of the access requester, the user identity certificate Cert_{User-AC} of the access controller, and another parameter Text3.

4. The trusted network connect handshake method based on Tri-element Peer Authentication according to claim 3, wherein the step 4 comprises: firstly generating a verification result Re_{User-AR} of the user identity certificate of the access requester and a verification result Re_{User-AC} of the user identity certificate of the access controller and then generating a verification result Re_{AIK-AR} of the platform identity certificate of the access requester and a verification result Re_{AIK-AC} of the platform identity certificate of the access controller; and if the platform identity certificate of the access requester is valid, then generating an integrity verifier level evaluation result Re_{IMVs-AR} of platform integrity of the access requester and integrity verifier level remediation information Rem_{IMVs-AR} of platform integrity of the access requester, and if the platform identity certificate of the access controller is valid, then generating an integrity verifier level evaluation result Re_{IMVs-AC} of platform integrity of the access controller and integrity verifier level remediation information Rem_{IMVs-AC} of platform integrity of the access controller, and finally transmitting a message 4 to the access controller, wherein the message 4 is constituted in two forms: in a first form, the message 4 comprises the verification result Re_{AIK-AR} of the platform identity certificate of the access requester, the integrity verifier level evaluation result Re_{IMVs-AR} of platform integrity of the access requester, the integrity verifier level remediation information Rem_{IMVs-AR} of platform integrity of the access requester, the verification result Re_{AIK-AC} of the platform identity certificate of the access controller, the integrity verifier level evaluation result Re_{IMVs-AC} of platform integrity of the access controller, the integrity verifier level remediation information Rem_{IMVs}-_{AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR}, Eval_{IMVs-AR}, Re_{IMVs-AR}, Rem_{IMVs-AC}, Cer_{User-AR}, Re_{User-AR5} N_{AR}, Cert_{AIK-AC}, Re_{AIK-AC}, PCRs_{AC}, Parm_{P-AC}, Eval_{IMVs-AC}, Re_{IMVs-AC}, Rem_{IMVs-AR}, Cert_{User-AC}, Re_{User-AC,} another parameter Text6]_{Sig-PMU} performed with a private key corresponding to a user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text6, and another parameter Text4; and in the second form, the message 4 comprises the verification result Re_{AIK-AR} of the platform identity certificate of the access requester, the integrity verifier level evaluation result Re_{IMVs-AR} of platform integrity of the access requester, the integrity verifier level remediation information Rem_{IMVs-AR} of platform integrity of the access requester, the verification result Re_{AIK-AC} of the platform identity certificate of the access controller, the integrity verifier level evaluation result Re_{IMVs-AC} of platform integrity of the access controller, the integrity verifier level remediation information Rem_{IMVs-AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR} Eval_{IMVs-AR,} Re_{IMVs-AR,} Rem_{IMVs-AC}, Cert_{User-AR}, Re_{User-AR5} another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester and another parameter Text6, a signature [N_{AR}, Cert_{AIK-AC}, Re_{AIK-AC}, PCRs_{AC}, Parm_{P-AC}, Eval_{IMVs-AC}, Re_{IMVs-AC5} ReM_{IMVs-AR}, Cert_{User-AC5} Re_{User-AC5} another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{user-Ac} of the access controller, the verification result Re_{User-AC} of the user identity certificate of the access controller and another parameter Text7, and another parameter Text4.

5. The trusted network connect handshake method based upon Tri-element Peer Authentication according to claim 4, wherein the step 5) comprises: upon reception of the message 4, if the message 4 is constituted in the first form, then firstly verifying by the access controller validity of the signature [N_{AC-PM}, Cert_{AIK-AR}, Re_{AIK-AR}, PCRs_{AR}, Parm_{P-AR}, Eval_{IMVs-AR}, Re_{IMVs}-_{AR}, Rem_{IMVs-AC}, Cer_{User-AR}, Re_{User-AR5} N_{AR}, Cert_{AIK-AC}, Re_{AIK-AC}, PCRs_{AC}, Parm_{P-AC}, Eval_{IMVs-AC}, Re_{IMVs-AC}, Rem_{IMVs-AR}, Cer_{User-AC}, Re_{User-AC}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text6, then generating a platform level evaluation result Re_{P-AR} of platform integrity of the access requester from the integrity verifier level evaluation result Re_{IMVs-AR} of platform integrity of the access requester, generating a platform authentication result of the access requester from the verification result Re_{AIK-AR} of the platform identity certificate of the access requester and the platform level evaluation result Re_{P-AR} of platform integrity of the access requester, next generating an access result Re_{access} of the access controller for the access requester from the platform authentication result of the access requester and the verification result Re_{User-AR} of the user identity certificate of the access requester, next generating key data g^{y} of the access controller and generating a session key between the access requester and the access controller from the key data g^{x} of the access requester, the key data g^{y} of the access controller and the ECDH parameter Parm_{ECDH} for key negotiation, and finally transmitting to the access requester the message 5 (constituted in a first form) comprising the challenger N_{AC-PM} of the access controller, the platform configuration register value PCRs_{AC} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, the integrity verifier level evaluation policy Eval_{IMVs-AR} of platform integrity of the access controller for the access requester, the access result Re_{access} of the access controller for the access requester, a message 4', the key data g^{y} of the access controller, another parameter Text5, and a signature [N_{AR}, N_{AC-PM}, PCRS_{AC}, [N_{AR}, PCRS_{AC}]_{Sig-ACP}, Eval_{IMVs-AR}, Re_{access}, the message 4', g^{y}, another parameter Text5]_{Sig-ACU} performed with the private key corresponding to the user identity certificate of the access controller on the other fields except for the present field in the message 5, where the message 4' refers to the other fields except for the concatenation value ADDID of the MAC addresses of the access requester and the access controller in the message 4; or if the message 4 is constituted in the second form, then firstly verifying validity of the signature [N_{AC-PM}, Cert_{AIK-AR}, Re_{AIK-AR}, PCRs_{AR}, Parm_{P-AR}, Eval_{IMVs-AR}, Re_{IMVs-AR}, Rem_{IMVs-AC}, Cert_{User-AR}, Re_{User-AR}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester and another parameter Text6, and then generating a platform level evaluation result Re_{P-AR} of platform integrity of the access requester from the integrity verifier level evaluation result Re_{IMVs-AR} of platform integrity of the access requester, generating a platform authentication result of the access requester from the verification result Re_{AIK-AR} of the platform identity certificate of the access requester and the platform level evaluation result Re_{P-AR} of platform integrity of the access requester, next generating an access result Reaccess of the access controller for the access requester from the platform authentication result of the access requester and the verification result Re_{User-AR} of the user identity certificate of the access requester, next generating key data g^{y} of the access controller and generating a session key between the access requester and the access controller from the key data g^{x} of the access requester, the key data g^{y} of the access controller and the ECDH parameter Parm_{ECDH} for key negotiation, and finally transmitting to the access requester the message 5 (constituted in a second form) comprising the challenger N_{AC-PM} of the access controller, the platform configuration register value PCRs_{AC} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, Reaccess, the verification result Re_{AIK-AC} of the platform identity certificate of the access controller, the integrity verifier level evaluation result Re_{IMVs-AC} of platform integrity of the access controller, the verification result Re_{User-AC} of the user identity certificate of the access controller, the integrity verifier level remediation information Rem_{IMVs-AR} of platform integrity of the access requester, the key data g^{y} of the access controller, the signature [N_{AR}, Cert_{AIK-AC}, Re_{AIK-AC}, PCRs_{AC}, Parm_{P-AC}, Eval_{IMVs-AC,} Re_{IMVs-AC,} Rem_{IMVs-AR}, Certu_{ser-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-Ac} of the access controller, the verification result Re_{User-AC} of the user identity certificate of the access controller and another parameter Text7, another parameter Text5, and a signature [N_{AR}, N_{AC-PM}, PCRS_{AC}, [N_{AR}, PCRs_{AC}]_{Sig-ACP}, Re_{access}, Re_{AIK-AC}, Re_{IMVs-AC}, Re_{User-AC,} Rem_{IMVs-AR}, g^{y}, [N_{AR}, Cert_{AIK-AC}, Re_{AIK-AC}, PCRs_{AC}, Parm_{P-AC}, EVal_{IMVs-AC}, Re_{IMVs-AC,} Rem_{IMVs-AR}, Cert_{User-AC}, Re_{User-AC}, another parameter Text7]_{Sig-PMU}, another parameter Text5]_{Sig-ACU} performed with a private key corresponding to the user identity certificate Cert_{User-AC} of the access controller on the other fields than the present field in the message 5.

6. The trusted network connect handshake method based on Tri-element Peer Authentication according to claim 5, wherein the step 6) comprises: upon reception of the message 5, if the message 5 is constituted in the first form, then firstly verifying by the access requester validity of the signature [N_{AR}, N_{AC-PM}, PCRs_{AC}, [N_{AR}, PCRs_{AC}]_{Sig-ACP}, Eval_{IMVs-AR}, Re_{access}, the message 4', g^{y}, another parameter Text5]_{Sig-ACU} performed with the private key corresponding to the user identity certificate Cert_{User-AC} of the access controller on the other fields except for the present field in the message 5, and if verification fails, then discarding the message; otherwise, verifying validity of the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, and if verification fails, then discarding the message; otherwise, verifying validity of the signature [N_{AC-PM}, Cert_{AIK-AR}, Re_{AIK-AR}, PCRs_{AR}, Parm_{P-AR}, Eval_{IMVs-AR,} Re_{IMVs-AR}, Rem_{IMVs-AC}, Cert_{User-AR}, Re_{User-AR}, N_{AR}, Cert_{AIK-AC}, Re_{AIK-AC}, PCRs_{AC}, Parm_{P-AC}, Eval_{IMVs-AC}, Re_{IMVs-AC}, Rem_{IMVs-AR}, Cer_{User-AC}, Re_{User-AC}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the integrity verifier level evaluation policy Eval_{IMVs-AR} of platform integrity of the access controller for the access requester, the integrity verifier level evaluation result Re_{IMVs-AR} of platform integrity of the access requester, the integrity verifier level remediation information Rem_{IMVs-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text6 in the message 4', and if verification fails, then discarding the message; otherwise, generating a platform level evaluation result Re_{P-AC} of platform integrity of the access controller from the integrity verifier level evaluation result Re_{IMVs-AC} of platform integrity of the access controller, generating a platform authentication result of the access controller from the verification result Re_{AIK-AC} of the platform identity certificate of the access controller and the platform level evaluation result Re_{P-AC} of platform integrity of the access controller, and next generating an access decision of the access requester for the access controller from the platform authentication result of the access controller and the verification result Re_{User-AR} of the user identity certificate of the access controller, and finally generating a session key between the access requester and the access controller by the access controller from the key data g^{x} of the access requester, the key data g^{y} of the access controller and the ECDH parameter Parm_{ECDH} for key negotiation; or if the message 5 is constituted in the second form, then firstly verifying validity of the signature [N_{AR}, N_{AC-PM}, PCRs_{AC}, [N_{AR}, PCRs_{AC}]_{Sig-ACP}, Re_{access}, Re_{AIK-AC}, Re_{IMVs-AC}, Re_{User-AC}, ReM_{IMVs-AR}, g^{y}, [N_{AR}, Cert_{AIK-AC}, Re_{AIK-AC}, PCRs_{AC}, Parm_{P-AC}, EVal_{IMVs-AC}, Re_{IMVs-AC}, Rem_{IMVs-AR}, Cert_{User-AC}, Re_{User-AC}, another parameter Text7]_{Sig-PMU}, another parameter Text5]_{Sig-ACU} performed with the private key corresponding to the user identity certificate Cert_{User-AC} of the access controller on the other fields except for the present field in the message 5, and if verification fails, then discarding the message; otherwise, verifying validity of the signature [N_{AR}, PCRs_{AC}]_{Sig-ACP} performed with the private key corresponding to the platform identity certificate Cert_{AIK}-_{AC} of the access controller on the challenger N_{AR} of the access requester and the platform configuration register value PCRs_{AC} of the access controller, and if verification fails, then discarding the message; otherwise, verifying validity of the signature [N_{AR}, Cert_{AIK-AC}, Re_{AIK-AC}, PCRs_{AC}, Parm_{P-AC}, Eval_{IMVs-AC}, Re_{IMVs-AC}, ReM_{IMVs-AR}, Cert_{User-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the integrity verifier level evaluation policy Eval_{IMVs-AC} of platform integrity of the access requester for the access controller, the integrity verifier level evaluation result Re_{IMVs-AC} of platform integrity of the access controller, the integrity verifier level remediation information Rem_{IMVs-AR} of platform integrity of the access requester, the user identity certificate Cert_{User-AC} of the access controller, the verification result Re_{User-AC} of the user identity certificate of the access controller and another parameter Text7, and if verification fails, then discarding the message; otherwise, generating a platform level evaluation result Re_{P-AC} of platform integrity of the access controller from the integrity verifier level evaluation result Re_{IMVs-AC} of platform integrity of the access controller, generating a platform authentication result of the access controller from the verification result Re_{AIK-AC} of the platform identity certificate of the access controller and the platform level evaluation result Re_{P-AC} of platform integrity of the access controller, and next generating an access decision of the access requester for the access controller from the platform authentication result of the access controller and the verification result Re_{User-AR} of the user identity certificate of the access controller, and finally generating a session key between the access requester and the access controller by the access controller from the key data g^{x} of the access requester, the key data g^{y} of the access controller and the ECDH parameter Parm_{ECDH} for key negotiation.

7. The trusted network connect handshake method based on Tri-element Peer Authentication according to claim 1, wherein the step 2) comprises: upon reception of the message 1, firstly extracting by the access requester a corresponding platform configuration register value PCRs_{AR} of the access requester, a platform integrity measurement log Log_{AR} of the access requester and a signature [N_{AC}, PCRs_{AR}]_{Sig-ARP} performed with a private key corresponding to a platform identity certificate of the access requester on the authentication identifier N_{AC} of the access controller and the platform configuration register value PCRs_{AR} of the access requester according to the platform integrity measurement information Parm_{P-AR} requested by the access controller from the access requester, and then transmitting to the access controller a message 2 comprising the platform configuration register value PCRs_{AR} of the access requester, the platform integrity measurement log Log_{AR} of the access requester, the signature [N_{AC}, PCRs_{AR}]_{Sig-ARP} performed with the private key corresponding to the platform identity certificate Cert_{AIK-AR} of the access requester on the authentication identifier N_{AC} of the access controller and the platform configuration register value PCRs_{AR} of the access requester, a challenge N_{AR} of the access requester, the platform identity certificate Cert_{AIK-AR} of the access requester, platform integrity measurement information Parm_{P-AC} requested by the access requester from the access controller, a platform level evaluation policy Eval_{P-AC} of platform integrity of the access requester for the access controller, key data g^{x} of the access requester, a user identity certificate Cert_{User-AR} of the access requester, the ECDH parameter Parm_{ECDH} for key negotiation, another parameter Text2, and a signature [N_{AC}, PCRs_{AR}, Log_{AR}, [N_{AC}, PCRs_{AR}]_{Sig-ARP,} N_{AR}, Cert_{AIK-AR}, Parm_{P-AC}, Eval_{P-AC}, g^{x}, Cert_{User-AR}, Parm_{ECDH}, another parameter Text2]_{Sig-ARU} performed with a private key corresponding to the user identity certificate Cert_{User-AR} of the access requester on the other fields except for the present field in the message 2.

8. The trusted network connect handshake method based on Tri-element Peer Authentication according to claim 7, wherein the step 3) comprises: upon reception of the message 2, firstly verifying by the access controller validity of the signature [N_{AC}, PCRs_{AR}, Log_{AR}, [N_{AC}, PCRS_{AR}]_{Sig-ARP}, N_{AR}, Cert_{AIK-AR}, Parm_{P-AC}, Eval_{P-AC}, g^{x}, Cert_{User-AR}, Parm_{ECDH}, another parameter Text2]_{Sig-ARU} performed with the private key corresponding to the user identity certificate Cert_{User-AR} of the access requester on the other fields except for the present field in the message 2, and if verification fails, then discarding the message; otherwise, verifying validity of the signature [N_{AC}, PCRs_{AR}]_{Sig-ARP} performed with the private key corresponding to the platform identity certificate Cert_{AIK-AR} of the access requester on the authentication identifier N_{AC} of the access controller and the platform configuration register value PCRs_{AR} of the access requester, and if verification fails, then discarding the message; otherwise, extracting a corresponding platform configuration register value PCRs_{AC} of the access controller, a platform integrity measurement log Log_{AC} of the access controller and a signature [N_{AR}, PCRs_{AC}]_{Sig-ACP} performed with a private key corresponding to the platform identity certificate Cert_{AIK-AC} of the access controller on the challenger N_{AR} of the access requester and the platform configuration register value PCRs_{AC} of the access controller according to the platform integrity measurement information Parm_{P-AC} requested by the access requester from the access controller, and then transmitting to the policy manager a message 3 comprising a challenger N_{AC-PM} of the access controller, the challenger N_{AR} of the access requester, the platform identity certificate Cert_{AIK-AR} of the access requester, the platform identity certificate Cert_{AIK-AC} of the access controller, the platform configuration register value PCRs_{AR} of the access requester, the platform integrity measurement log Log_{AR} of the access requester, the platform configuration register value PCRs_{AC} of the access controller, the platform integrity measurement log Log_{AC} of the access controller, the platform integrity measurement information Parm_{P-AR} requested by the access controller from the access requester, a platform level evaluation policy Eval_{P-AR} of platform integrity of the access controller for the access requester, the platform integrity measurement information Parm_{P-AC} requested by the access requester from the access controller, the platform level evaluation policy Eval_{P-AC} of platform integrity of the access requester for the access controller, a concatenation value ADDID of MAC addresses of the access requester and the access controller, the user identity certificate Cert_{User-AR} of the access requester, the user identity certificate Cert_{User-AC} of the access controller, and another parameter Text3.

9. The trusted network connect handshake method based on Tri-element Peer Authentication according to claim 8, wherein the step 4) comprises: upon reception of the message 3, firstly generating by the policy manager a verification result Re_{User-AR} of the user identity certificate of the access requester and a verification result Re_{User-AC} of the user identity certificate of the access controller and then generating a verification result Re_{AIK-AR} of the platform identity certificate of the access requester and a verification result Re_{AIK-AC} of the platform identity certificate of the access controller; and if the platform identity certificate of the access requester is valid, then generating a platform level evaluation result Re_{P-AR} of platform integrity of the access requester and platform level remediation information Rem_{P-AR} of platform integrity of the access requester, and if the platform identity certificate of the access controller is valid, then generating a platform level evaluation result Re_{P-AC} of platform integrity of the access controller and platform level remediation information Rem_{P-AC} of platform integrity of the access controller, and finally transmitting a message 4 to the access controller, where the message 4 is constituted in two forms: in a first form, the message 4 comprises the verification result Re_{AIK-AR} of the platform identity certificate of the access requester, the platform level evaluation result Re_{P-AR} of platform integrity of the access requester, the platform level remediation information Rem_{P-AR} of platform integrity of the access requester, the verification result Re_{AIK-AC} of the platform identity certificate of the access controller, the platform level evaluation result Re_{P-AC} of platform integrity of the access controller, the platform level remediation information Rem_{P-AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR}, Eval_{P-AR}, Re_{P-AR}, Rem_{P-AC}, Cert_{User-AR}, Re_{User-AR}, N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC}, another parameter Text6]_{Sig-PMU} performed with a private key corresponding to a user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text6, and another parameter Text4; and in the second form, the message 4 comprises the verification result Re_{AIK-AR} of the platform identity certificate of the access requester, the platform level evaluation result Re_{P-AR} of platform integrity of the access requester, the platform level remediation information Rem_{P-AR} of platform integrity of the access requester, the verification result Re_{AIK-AC} of the platform identity certificate of the access controller, the platform level evaluation result Re_{P-AC} of platform integrity of the access controller, the platform level remediation information Rem_{P-AC} of platform integrity of the access controller, the concatenation value ADDID of the MAC addresses of the access requester and the access controller, the verification result Re_{User-AR} of the user identity certificate of the access requester, the verification result Re_{User-AC} of the user identity certificate of the access controller, a signature [N_{AC-PM}, Cert_{AIK-AR}, Re_{AIK-AR}, PCRs_{AR}, Parm_{P-AR}, Eval_{P-AR}, Re_{P-AR}, Rem_{P-AC5} Cert_{User-AR}, Re_{User-AR}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester and another parameter Text6, a signature [N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC5} another parameter Text7]_{Sig-PMU} performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text7, and another parameter Text4.

10. The trusted network connect handshake method based on Tri-element Peer Authentication according to claim 9, wherein the step 5) comprises: upon reception of the message 4, if the message 4 is constituted in the first form, then firstly verifying by the access controller validity of the signature [N_{AC-PM}, Cert_{AIK-AR}, Re_{AIK-AR}, PCRs_{AR}, Parm_{P-AR}, EVal_{P-AR}, Re_{P-AR}, Rem_{P-AC}, Cert_{User-AR}, Re_{User-AR}, N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text6, then generating a platform authentication result of the access requester from the verification result Re_{AIK-AR} of the platform identity certificate of the access requester and the platform level evaluation result Re_{P-AR} of platform integrity of the access requester, next generating an access result Reaccess of the access controller for the access requester from the platform authentication result of the access requester and the verification result Re_{User-AR} of the user identity certificate of the access requester, next generating key data g^{y} of the access controller and generating a session key between the access requester and the access controller from the key data g^{x} of the access requester, the key data g^{y} of the access controller and the ECDH parameter Parm_{ECDH} for key negotiation, and finally transmitting to the access requester a message 5 (constituted in a first form) comprising the challenger N_{AC-PM} of the access controller, the platform configuration register value PCRs_{AC} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, the platform level evaluation policy Eval_{P-AR} of platform integrity of the access controller for the access requester, the access result Re_{access} of the access controller for the access requester, a message 4', the key data g^{y} of the access controller, another parameter Text5, and a signature [N_{AR}, N_{AC-PM}, PCRs_{AC}, [N_{AR}, PCRS_{AC}]_{Sig-ACP}, Eval_{P-AR}, Re_{access}, the message 4', g^{y}, another parameter Text5]_{Sig-ACU} performed with the private key corresponding to the user identity certificate of the access controller on the other fields except for the present field in the message 5, where the message 4' refers to the other fields than the concatenation value ADDID of the MAC addresses of the access requester and the access controller in the message 4; or if the message 4 is constituted in the second form, then firstly verifying validity of the signature [N_{AC-PM}, Cert_{AIK-AR}, Re_{AIK-AR}, PCRs_{AR}, Parm_{P-AR}, Eval_{P-AR}, Re_{P-AR}, Rem_{P-AC}, Cert_{User-AR}, Re_{User-AR}, another parameter Text6]_{Sig-PMU} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester and another parameter Text6, and then generating a platform authentication result of the access requester from the verification result Re_{AIK-AR} of the platform identity certificate of the access requester and the platform level evaluation result Re_{P-AR} of platform integrity of the access requester, next generating an access result Re_{access} of the access controller for the access requester from the platform authentication result of the access requester and the verification result Re_{User-AR} of the user identity certificate of the access requester, next generating key data g^{y} of the access controller and generating a session key between the access requester and the access controller from the key data g^{x} of the access requester, the key data g^{y} of the access controller and the ECDH parameter Parm_{ECDH} for key negotiation, and finally transmitting to the access requester a message 5 (constituted in a second form) comprising the challenger N_{AC-PM} of the access controller, the platform configuration register value PCRs_{AC} of the access controller, the signature [N_{AR}, PCRs_{AC}]_{Sig-ACP} performed with the private key corresponding to the platform identity certificate Cert_{AIK-AC} of the access controller on the challenger N_{AR} of the access requester and the platform configuration register value PCRs_{AC} of the access controller, Re_{access}, the verification result Re_{AIK-AC} of the platform identity certificate of the access controller, the platform level evaluation result Re_{P-AC} of platform integrity of the access controller, the verification result Re_{User-AC} of the user identity certificate of the access controller, the platform level remediation information Rem_{P-AR} of platform integrity of the access requester, the key data g^{y} of the access controller, the signature [N_{AR}, Cert_{AIK-AC}, Re_{AIK-AC}, PCRs_{AC}, Parm_{P-AC}, Eval_{P-AC}, Re_{P-AC}, Rem_{P-AR}, Cert_{User-AC}, Re_{User-AC}, another parameter Text7]_{Sig}-PMU performed with the private key corresponding to the user identity certificate Cert_{User-PM} of the policy manager on the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text7, another parameter Text5, and a signature [N_{AR}, N_{AC-PM}, PCRs_{AC}, [N_{AR}, PCRs_{AC}]Sig-ACP, Re_{access}, Re_{AIK-AC}, Re_{P-AC} Re_{User-AC}, Rem_{P-AR}, g^{y}, [N_{AR}, Cert_{AIK-AC}, Re_{AIK-AC}, PCRs_{AC}, Parm_{P-AC}, Eval_{P-AC}, RE_{P-AC}, Rem_{P-AR}, Cert_{User-AC}, Re_{User-AC5} another parameter Text7]_{Sig-PMU}, another parameter Text5]_{Sig-Acu} performed with a private key to the user identity certificate Cert_{User-Ac} of the access controller on the other fields except for the present field in the message 5.

11. The trusted network connect handshake method based on Tri-element Peer Authentication according to claim 10, wherein the step 6) comprises: upon reception of the message 5, if the message 5 is constituted in the first form, then firstly verifying by the access requester validity of the signature [N_{AR}, N_{AC-PM,} PCRs_{AC}, [N_{AR}, PCRs_{AC}]_{Sig-ACP}, Eval_{P-AR}, Re_{access}, the message 4', g^{y}, another parameter Text5]_{Sig-ACU} performed with the private key corresponding to the user identity certificate Cert_{User-AC} of the access controller on the other fields except for the present field in the message 5, and if verification fails, then discarding the message; otherwise, verifying validity of the signature [N_{AR}, PCRs_{AC}]Sig-ACP performed with the private key corresponding to the platform identity certificate Cert_{AIK-AC} of the access controller on the challenger N_{AR} of the access requester and the platform configuration register value PCRs_{AC} of the access controller, and if verification fails, then discarding the message; otherwise, verifying validity of the signature [N_{AC-PM}, Cert_{AIK-AR}, Re_{AIK-AR}, PCRs_{AR}, Parm_{P-AR}, EVal_{P-AR}, Re_{P-AR}, Rem_{P-AC}, Cert_{User-AR}, Re_{User-AR}, N_{AR}, Cert_{AIK-AC}, Re_{AIK-AC}, PCRs_{AC}, Parm_{P-AC}, EVal_{P-AC}, Re_{P-AC}, Rem_{P-AR}, Cert_{User-AC}, Re_{User-AC5} another parameter Text6]_{Sig-PMu} performed with the private key corresponding to the user identity certificate Cert_{User-PM} of the policy manager on the challenger N_{AC-PM} of the access controller, the platform identity certificate Cert_{AIK-AR} of the access requester, the verification result Re_{AIK-AR} of the platform identity certificate of the access requester, the platform configuration register value PCRs_{AR} of the access requester, the platform integrity measurement information Parm_{P-AR} requested by the access controller from the access requester, the platform level evaluation policy Eval_{P-AR} of platform integrity of the access controller for the access requester, the platform level evaluation result Re_{P-AR} of platform integrity of the access requester, the platform level remediation information Rem_{P-AC} of platform integrity of the access controller, the user identity certificate Cert_{User-AR} of the access requester, the verification result Re_{User-AR} of the user identity certificate of the access requester, the challenge N_{AR} of the access requester, the platform identity certificate Cert_{AIK-AC} of the access controller, the verification result Re_{AIK-AC} of the platform identity certificate of the access controller, the platform configuration register value PCRs_{AC} of the access controller, the platform integrity measurement information Parm_{P-Ac} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text6 in the message 4', and if verification fails, then discarding the message; otherwise, generating a platform authentication result of the access controller from the verification result Re_{AIK-AC} of the platform identity certificate of the access controller and the platform level evaluation result Re_{P-AC} of platform integrity of the access controller, and next generating an access decision of the access requester for the access controller from the platform authentication result of the access controller and the verification result Re_{User-AR} of the user identity certificate of the access controller, and finally generating a session key between the access requester and the access controller by the access controller from the key data g^{x} of the access requester, the key data g^{y} of the access controller and the ECDH parameter Parm_{ECDH} for key negotiation; or if the message 5 is constituted in the second form, then firstly verifying validity of the signature [N_{AR}, N_{AC-PM}, PCRs_{AC}, [N_{AR}, PCRS_{AC}]_{Sig-ACP}, Re_{access}, Re_{AIK-AC}, Re_{P-AR}, Re_{User-AC5} Rem_{P-AR5} g^{y}, [N_{AR}, Cert_{AIK-AC}, Re_{AIK-AC}, PCRs_{AC}, Parm_{P-AC}, EVal_{P-AC}, Re_{P-AC}, Rem_{P-AR5} Cert_{User-AC}, Re_{User-AC}, another parameter Text7]_{Sig-PMU,} another parameter Text5]_{Sig-ACU} performed with the private key corresponding to the user identity certificate Cert_{User-Ac} of the access controller on the other fields except for the present field in the message 5, and if verification fails, then discarding the message; otherwise, verifying validity of the signature [N_{AR}, PCR_{SAC}]_{Sig-ACP} performed with the private key corresponding to the platform identity certificate Cert_{AIK-AC} of the access controller on the challenger N_{AR} of the access requester and the platform configuration register value PCRs_{AC} of the access controller, and if verification fails, then discarding the message; otherwise, verifying validity of the signature [N_{AR}, Cert_{AIK-AC}, Re_{AIK}-_{AC}, PCRs_{AC}, Parm_{P-AC}, Eval_{P-AC}, Re_{P-AC}, Rem_{P-AR5} Cert_{User-AC}, Re_{User-AC}, another parameter Text7]_{Sig-PMU} performed with the private key corresponding to the user identity certificate Cert_{User-PM} of the policy manager on the challenge N_{AR} of the access requester, the platform identity certificate Cert_{AIK}-_{AC} of the access controller, the verification result Re_{AIK-AC} of the platform identity certificate of the access controller, the platform configuration register value PCRs_{AC} of the access controller, the platform integrity measurement information Parmp-_{AC} requested by the access requester from the access controller, the platform level evaluation policy Eval_{P-AC} of platform integrity of the access requester for the access controller, the platform level evaluation result Re_{P-AC} of platform integrity of the access controller, the platform level remediation information Rem_{P-AR} of platform integrity of the access requester, the user identity certificate Cert_{User-AC} of the access controller, the verification result Re_{User-AC} of the user identity certificate of the access controller and another parameter Text7, and if verification fails, then discarding the message; otherwise, generating a platform authentication result of the access controller from the verification result Re_{AIK-AC} of the platform identity certificate of the access controller and the platform level evaluation result Re_{P-AC} of platform integrity of the access controller, and next generating an access decision of the access requester for the access controller from the platform authentication result of the access controller and the verification result Re_{User-AR} of the user identity certificate of the access controller, and finally generating a session key between the access requester and the access controller by the access controller from the key data g^{x} of the access requester, the key data g^{y} of the access controller and the ECDH parameter Parm_{ECDH} for key negotiation.
